# EUROPEAN PATENT APPLICATION

(11) **EP 4 338 625 A1**
(43) Date of publication of application: **20.03.2024**
(21) Application number: 22807085.0
(22) Date of filing: 28.02.2022
(51) Int. Cl.: A24F 40/53

(54) **POWER SUPPLY UNIT FOR AEROSOL GENERATION DEVICE**

(30) Priority: 10.05.2021 JP 2021079744
(71) Applicant: Japan Tobacco, Inc., Tokyo, 105-6927 (JP)
(72) Inventor: AOYAMA, Tatsunari, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/008329
(87) International publication number: WO 2022/239378

(57) **Abstract**

This power supply unit for an aerosol generation device comprises: a power supply; a heater connector to which a heater that consumes power supplied from the power supply and heats an aerosol source is connected; a control circuit that controls the supply of power from the power supply to the heater; a power supply monitoring circuit that monitors the state of the power supply; a charge blocking switch that has a first control terminal and blocks charging to the power supply on the basis of an input to the first control terminal; a discharge blocking switch that has a second control terminal and blocks discharging from the power supply on the basis of an input to the second control terminal; and a protective circuit that supplies a control signal to at least one among the first control terminal and the second control terminal on the basis of the state of the power supply. When the state of the power supply satisfies a condition in a first condition set, the power supply monitoring circuit performs an operation for at least temporarily restricting at least charging the power supply or supplying power from the power supply to the heater. When the state of the power supply satisfies a condition in a second condition set, the protective circuit turns off at least one among the charge blocking switch and the discharge blocking switch. The first condition set includes a condition related to a first physical quantity of the power supply. The second condition set includes a condition related to the first physical quantity of the power supply.

## Description

### TECHNICAL FIELD

The present invention relates to a power supply unit for an aerosol generation device.

### BACKGROUND ART

An aerosol generation device such as an electronic cigarette has a configuration for heating a liquid used to form aerosol. A battery powered heating device described in PTL 1 includes a fuel gauge circuit that monitors various battery characteristics.

### CITATION LIST

### PATENT LITERATURE

PTL 1: Japanese Patent Laid-Open No. 2020-61361

### SUMMARY OF INVENTION

### TECHNICAL PROBLEM

In PTL 1, a power supply monitoring circuit that monitors various characteristics of a power supply is used, thereby protecting a power supply unit for an aerosol generation device. However, there is room for improvement of this protection. It is an object of some aspects of the present invention to provide a technique for improving the safety of a power supply unit for an aerosol generation device.

### SOLUTION TO PROBLEM

According to a first embodiment, there is provided a power supply unit for an aerosol generation device, comprising:
a power supply;
a heater connector to which a heater configured to heat an aerosol source by consuming power supplied from the power supply is connected;
a control circuit configured to control supply of the power from the power supply to the heater;
a power supply monitoring circuit configured to monitor a state of the power supply;
a charge cutoff switch including a first control terminal and configured to cut off charge to the power supply based on an input to the first control terminal;
a discharge cutoff switch including a second control terminal and configured to cut off discharge from the power supply based on an input to the second control terminal; and
a protection circuit configured to supply a control signal to at least one of the first control terminal and the second control terminal based on the state of the power supply,
wherein in a case where the state of the power supply satisfies a condition of the first condition set, the power supply monitoring circuit performs an operation for at least temporarily restricting at least one of the charge of the power supply and the supply of the power from the power supply to the heater,
in a case where the state of the power supply satisfies a condition of the second condition set, the protection circuit turns off at least one of the discharge cutoff switch and the charge cutoff switch,
the first condition set includes a condition concerning a first physical quantity of the power supply, and
the second condition set includes a condition concerning the first physical quantity of the power supply.

According to this embodiment, a specific physical quantity of a power supply is monitored by both a power supply monitoring circuit and a protection circuit, thereby protecting the power supply even if one of these does not operate normally.

According to a second embodiment, there is provided the power supply unit according to the first embodiment, wherein the condition concerning the first physical quantity included in the first condition set is stricter than the condition concerning the first physical quantity included in the second condition set.

If protection by the protection circuit is performed, a control circuit stops, and therefore, recovery from the state in which the protection is performed is not easy. On the other hand, even if protection by the power supply monitoring circuit is performed, the control circuit does not stop, and therefore, recovery from the state in which the protection is performed is relatively easy. According to this embodiment, protection by the power supply monitoring circuit can be implemented before protection by the protection circuit. That is, if the power supply monitoring circuit has no abnormality, protection is performed not by the protection circuit but by the power supply monitoring circuit. This can facilitate recovery from the state in which the protection is performed.

According to a third embodiment, there is provided the power supply unit according to the first embodiment, wherein the condition concerning the first physical quantity included in the first condition set is satisfied before the condition concerning the first physical quantity included in the second condition set.

If protection by the protection circuit is performed, a control circuit stops, and therefore, recovery from the state in which the protection is performed is not easy. On the other hand, even if protection by the power supply monitoring circuit is performed, the control circuit does not stop, and therefore, recovery from the state in which the protection is performed is relatively easy. According to this embodiment, protection by the power supply monitoring circuit can be implemented before protection by the protection circuit. That is, if the power supply monitoring circuit has no abnormality, protection is performed not by the protection circuit but by the power supply monitoring circuit. This can facilitate recovery from the state in which the protection is performed.

According to a fourth embodiment, there is provided the power supply unit according to any one of the first to third embodiments, wherein
the first condition set includes
   a condition concerning comparison between the first physical quantity and a first threshold, and
   a condition concerning comparison between the first physical quantity and a second threshold different from the first threshold,
the second condition set includes a condition concerning comparison between the first physical quantity and a third threshold, and
a difference between the first threshold and the second threshold is smaller than a difference between the first threshold and the third threshold and smaller than a difference between the second threshold and the third threshold.

According to this embodiment, it is possible to easily suppress simultaneous working of the protection operation by the power supply monitoring circuit and the protection operation by the protection circuit.

According to a fifth embodiment, there is provided the power supply unit according to the fourth embodiment, wherein
the third threshold is larger than the second threshold, and
the second threshold is larger than the first threshold.

According to this embodiment, protection by the power supply monitoring circuit can be implemented before protection by the protection circuit. That is, if the power supply monitoring circuit has no abnormality, protection is performed not by the protection circuit but by the power supply monitoring circuit. This can facilitate recovery from the state in which the protection is performed.

According to a sixth embodiment, there is provided the power supply unit according to the fourth or fifth embodiment, wherein
the power supply monitoring circuit includes a first output terminal and a second output terminal,
in a case where the state of the power supply satisfies the condition concerning the comparison between the first physical quantity and the first threshold, a first error signal is output from the first output terminal, and
in a case where the state of the power supply satisfies the condition concerning the comparison between the first physical quantity and the second threshold, a second error signal is output from the second output terminal.

According to this embodiment, since different error processing can be performed in accordance with the state of the power supply, the power supply unit can more appropriately be protected.

According to a seventh embodiment, there is provided the power supply unit according to any one of the first to sixth embodiments, wherein in a case where the state of the power supply satisfies the condition concerning the first physical quantity of the power supply, the power supply monitoring circuit does not change the power supply unit to a failure state in which charge and discharge of the power supply are permanently inhibited.

According to this embodiment, for a physical quantity monitored by both the power supply management circuit and the protection circuit, the power supply unit is not set in a failure state, thereby suppressing setting the power supply unit in the failure state. That is, since the aerosol generation device can be used again after the abnormality of the power supply is eliminated, the convenience of the user improves.

According to an eighth embodiment, there is provided the power supply unit according to any one of the first to fifth embodiments, wherein
in a case where it is determined that a residual quantity of the power supply is smaller than a first lower limit value, the power supply monitoring circuit performs an operation for restricting the discharge from the power supply,
in a case where it is determined that the residual quantity of the power supply is smaller than a second lower limit value lower than the first lower limit value, the protection circuit turns off the discharge cutoff switch, and
in a case where it is determined that the residual quantity of the power supply is smaller than a third lower limit value lower than the second lower limit value, the control circuit performs an operation for changing the power supply unit to a failure state in which charge and discharge of the power supply are permanently inhibited.

According to this embodiment, it is possible to execute a stepwise protection operation according to the residual quantity of the power supply.

According to a ninth embodiment, there is provided the power supply unit according to the eighth embodiment, wherein the control circuit can determine whether the residual quantity of the power supply is smaller than the third lower limit value without using information acquired from the power supply monitoring circuit.

In a state in which the power supply is excessively discharged, such as an overdischarge state or a deep discharge state, it is difficult for the power supply monitoring circuit to acquire the state of the power supply. According to this embodiment, even if the power supply monitoring circuit cannot normally acquire the state of the power supply, the power supply unit can correctly determine the state of the power supply by the control circuit.

According to a tenth embodiment, there is provided the power supply unit according to the eighth or ninth embodiment, wherein a condition for returning, to an ON state, the discharge cutoff switch that is turned off by determining that the residual quantity of the power supply is smaller than the second lower limit value includes the control circuit determining that the residual quantity of the power supply is larger than the third lower limit value.

According to this embodiment, it is possible to suppress charge of the power supply determined to be in the deep discharge state.

According to an eleventh embodiment, there is provided the power supply unit according to any one of the first to tenth embodiments, wherein
the first condition set includes a condition concerning a second physical quantity of the power supply, the second physical quantity being different from the first physical quantity of the power supply, and
the second condition set does not include a condition concerning the second physical quantity of the power supply.

According to this embodiment, since the protection circuit does not monitor some physical quantities, the size and cost of the protection circuit can be reduced.

According to a twelfth embodiment, there is provided the power supply unit according to the eleventh embodiment, wherein the condition concerning the second physical quantity included in the first condition set includes a condition for changing the power supply unit to a failure state in which charge and discharge of the power supply are permanently inhibited.

According to this embodiment, the power supply unit is changed to the failure state in accordance with an error associated with a physical quantity that is not protected by the protection circuit, thereby further improving the safety of the power supply unit.

According to a thirteenth embodiment, there is provided the power supply unit according to the eleventh or twelfth embodiment, wherein
the first condition set includes a condition concerning a temperature of the power supply being higher than an upper limit temperature,
the second condition set does not include a condition concerning the temperature of the power supply, and
in a case where the condition concerning the temperature of the power supply being higher than the upper limit temperature is satisfied, the control circuit changes the power supply unit to a failure state in which charge and discharge of the power supply are permanently inhibited.

According to this embodiment, the power supply unit is changed to the failure state in accordance with an error associated with the temperature of the power supply unit that is not protected by the protection circuit, thereby further improving the safety of the power supply unit.

According to a fourteenth embodiment, there is provided the power supply unit according to any one of the eleventh to thirteenth embodiments, wherein the condition concerning the second physical quantity included in the first condition set includes a condition for changing the power supply unit to a state in which an operation by a user is not required to cancel restriction of the charge of the power supply or the supply of the power from the power supply to the heater.

According to this embodiment, since an operation by a user is not required concerning an error that is expected to be eliminated naturally, the convenience of the user improves.

According to a fifteenth embodiment, there is provided the power supply unit according to the fourteenth embodiment, wherein
the first condition set includes a condition concerning the temperature of the power supply being lower than a lower limit temperature,
the second condition set does not include a condition concerning the temperature of the power supply, and
in a case the condition concerning the temperature of the power supply being lower than the lower limit temperature is satisfied, the control circuit changes the power supply unit to the state in which the operation by the user is not required to cancel restriction of the discharge or the charge of the power supply.

According to this embodiment, since an operation by a user is not required concerning a low temperature state of the power supply, which is expected to be eliminated naturally, the convenience of the user improves.

### ADVANTAGEOUS EFFECTS OF INVENTION

According to the first form, the safety of a power supply unit for an aerosol generation device improves.

Other features and advantages of the present invention will be apparent from the following descriptions taken in conjunction with the accompanying drawings, in which like reference characters designate the same or similar parts throughout the figures thereof.

### BRIEF DESCRIPTION OF DRAWINGS

Fig. 1 is a view showing an example of the outer appearance of a power supply unit for an aerosol generation device according to some embodiments;
Fig. 2 is a perspective view showing an example of the internal configuration of the power supply unit according to some embodiments;
Fig. 3 is a view showing an example of the entire circuit configuration of the power supply unit according to some embodiments;
Fig. 4 is a view for explaining an example of the configuration of a protection control unit according to some embodiments;
Fig. 5 is a view for explaining an example of the monitoring condition set of a battery according to some embodiments;
Fig. 6A is a flowchart for explaining an example of a battery monitoring operation by an MCU according to some embodiments;
Fig. 6B is a flowchart for explaining an example of a battery monitoring operation by an MCU according to some embodiments;
Fig. 7A is a flowchart for explaining an example of a battery monitoring operation by a battery monitoring circuit according to some embodiments;
Fig. 7B is a flowchart for explaining an example of a battery monitoring operation by a battery monitoring circuit according to some embodiments;
Fig. 8 is a flowchart for explaining an example of an interrupt operation by the MCU according to some embodiments;
Fig. 9 is a flowchart for explaining an example of a battery monitoring operation by a protection circuit according to some embodiments;
Fig. 10 is a flowchart for explaining an example of a deep discharge determination operation for a battery according to some embodiments; and
Fig. 11 is a view for explaining an example of the normal range of a battery temperature according to some embodiments.

### DESCRIPTION OF EMBODIMENTS

Hereinafter, embodiments will be described in detail with reference to the accompanying drawings. It should be noted that the following embodiments are not intended to limit the scope of the appended claims, and that not all the combinations of features described in the embodiments are necessarily essential to the present invention. Of a plurality of features described in the embodiments, two or more features may arbitrarily be combined. In addition, the same reference numerals denote the same or similar parts, and a repetitive description will be omitted.

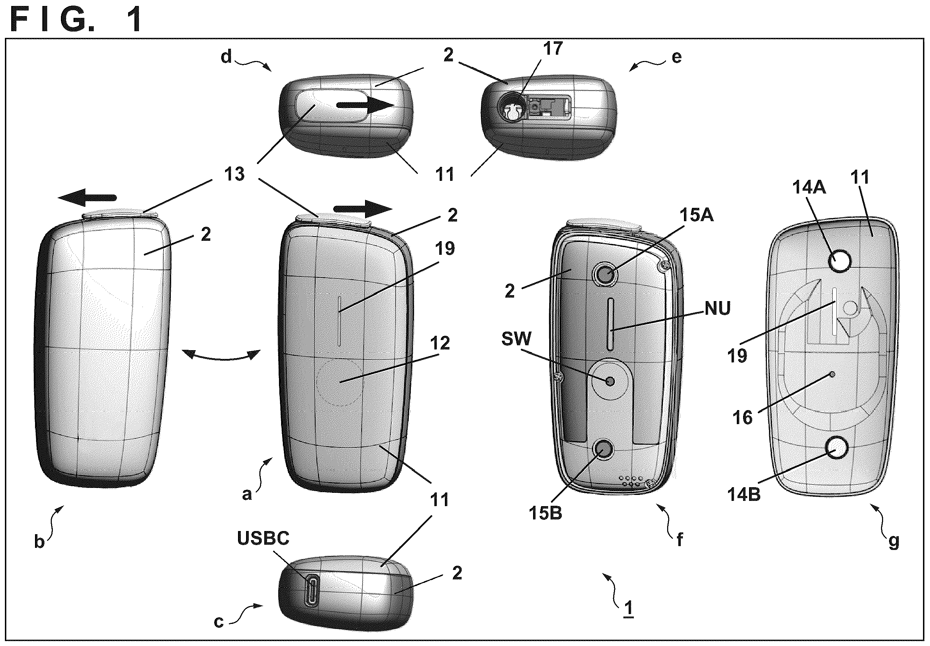

Fig. 1 is an outer appearance perspective view schematically showing an example of the configuration of a power supply unit 1 for an aerosol generation device according to an embodiment of the present invention. The power supply unit 1 includes a case 2 having a substantially rectangular parallelepiped shape with round corners. The case 2 forms the surface of the power supply unit 1. Here, a surface shown in Fig. 1(a) is defined as a front surface, and a surface shown in Fig. 1(b) is defined as a back surface for the descriptive convenience. In addition, a surface shown in Fig. 1(c) is defined as a bottom surface, and a surface shown in Fig. 1(d) is defined as a top surface.

The power supply unit 1 includes the case (housing) 2, and a front panel 11 detachably attached to the case 2. Fig. 1(f) shows a state in which the front panel 11 is removed from the state shown in Fig. 1(a). Also, Fig. 1(g) shows the state of the front panel 11 viewed from inside. The front panel 11 functions as the front cover of the case 2, and a user can freely exchange the front panel 11 to customize the outer appearance.

The inner surface of the front panel 11 and the front surface of the case 2 are provided with two pairs of magnets 14A and 14B and magnets 15A and 15B at opposite positions. Since the magnets 14A and 15A attract each other, and the magnets 14B and 15B attract each other, the magnetic force holds the front panel 11 in front of the case 2.

Additionally, a pressable switch SW and a light emitting unit NU are provided in front of the case 2. The inner surface of the front panel 11 is provided with a convex portion 16 at a position facing the switch SW. If a vicinity 12 of the center of the front panel 11 is pressed in a state in which the front panel 11 is attached, the switch SW can indirectly be pressed via the convex portion 16. Note that it is also possible to directly press the switch SW in a state in which the front panel 11 is detached. In the light emitting unit NU, a plurality of light emitting elements (for example, LEDs) are arranged in a row. The state of the light emitting unit NU can be observed through a window 19 provided in the front panel 11.

An openable/closable slider 13 is provided on the top surface of the case 2. When the slider 13 is moved in the direction of an arrow, a heater chamber 17 appears, as shown in Fig. 1(e). The slider 13 is not illustrated in Fig. 1(e) for the sake of convenience. The heater chamber 17 is a tubular space whose horizontal cross section has an elliptical shape (long round rectangular shape), and heats a stick or a cartridge inserted into the heater chamber 17. The stick has a cylindrical shape, and the diameter of its horizontal cross section is made larger than the short diameter of the horizontal cross section of the heater chamber 17. Hence, when inserted into the heater chamber 17, the stick is compressed in the radial direction. This improves contactability between the outer surface of the stick and the heater chamber 17 and also increases the contact area. It is therefore possible to efficiently heat the stick. This can improve the amount or flavor of aerosol generated from the stick.

If the slider 13 is moved to a position to expose the heater chamber 17 in a state in which the front panel 11 is attached, and that the switch SW is pressed continuously for a predetermined time (for example, several sec) is detected, the power supply unit 1 recognizes this as a heating start instruction and starts a heating operation.

Note that the stick to be heated by the heater chamber 17 may contain only an aerosol source or may contain an aerosol source and a flavor material. The aerosol source can contain, for example, a liquid such as a polyhydric alcohol such as glycerin or propylene glycol. As a detailed example, the aerosol source can contain a solution mixture of glycerin and propylene glycol. Alternatively, the aerosol source may contain a drug or a herb. Alternatively, the aerosol source may contain a flavoring agent such as menthol. Alternatively, the aerosol source may contain nicotine in a liquid phase. The aerosol source may be a liquid, a solid, or a mixture of a liquid and a solid A vapor source such as water may be used in place of the aerosol source or in addition to the aerosol source. The stick may contain a carrier for carrying the aerosol source. The carrier itself may be a solid aerosol source. The carrier may contain a sheet made of a raw material derived from a tobacco leaf.

A connector USBC configured to connect an external device is provided in the bottom surface of the case 2. Here, the connector USBC is assumed to be a receptacle complying with the USB Type-C standard. When charging the power supply unit 1, an external device (a USB charger, a mobile battery, a personal computer, or the like) capable of supplying power in accordance with, for example, the USB PD standard is connected to the connector USBC. Note that the connector USBC may comply with a standard other than the USB Type-C standard. Note that a power receiving coil for noncontact charge may be provided in the power supply unit 1 in place of the connector USBC or in addition to the connector USBC.

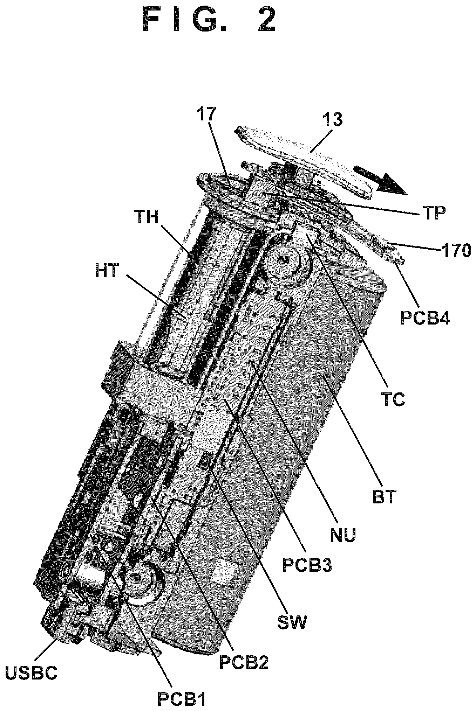

Fig. 2 is a perspective view schematically showing a state in which the case 2 is detached from the power supply unit 1. The same reference numerals as in Fig. 1 denote the same constituent elements in Fig. 2. A heater unit HT (to be simply referred to as a heater HT hereinafter) is a load that is provided on the outer periphery of the heater chamber 17 heats the heater chamber 17 by consuming power supplied from the power supply and thus heats the aerosol source. Although not illustrated in Fig. 2, the heater HT is covered with a heat insulating material. A heater thermistor TH attached to the heat insulating material of the heater HT or the heater HT itself is a temperature sensor that indirectly measures the temperature of the heater HT. Note that the heater HT may use an induction heating method. In this case, the heater HT includes at least a coil for electromagnetic induction. A susceptor (metal piece) that receives a magnetic field sent from the coil for electromagnetic induction may be included in the heater HT or incorporated in the stick.

A puff thermistor TP is a suction sensor arranged at the upper end portion of the heater chamber 17. Suction can be detected using the fact that when aerosol is sucked, a temperature detected by the puff thermistor TP varies.

A case thermistor TC is provided near the inner surface of the front surface of the case 2 and detects a case temperature.

A battery BT is chargeable and is, for example, a lithium ion secondary battery. The battery BT is a power supply that supplies basic power of the power supply unit 1. The battery BT is attached at the time of manufacturing, and the power supply unit 1 is shipped in a state (sleep state) in which power is supplied to most constituent elements except the heater and the thermistors.

A detector 170 is an opening/closing sensor that detects opening/closing of the slider 13, and may be an integrated circuit (Hall IC) using a Hall element.

The circuits of the power supply unit 1 are distributively arranged on four circuit boards PCB1 to PCB4. Instead, the circuits of the power supply unit 1 may be arranged on one circuit board, or may distributively be arranged on two or three or more circuit boards.

In the above-described configuration, the power supply unit 1 includes the heater HT. Instead, a cartridge including an aerosol source may include a heater. In this case, the power supply unit 1 includes a heater connector, and the heater connector is connected to a connector on the heater side by attaching the cartridge to the power supply unit 1. The power supply unit 1 supplies power to the heater in the cartridge via the heater connector.

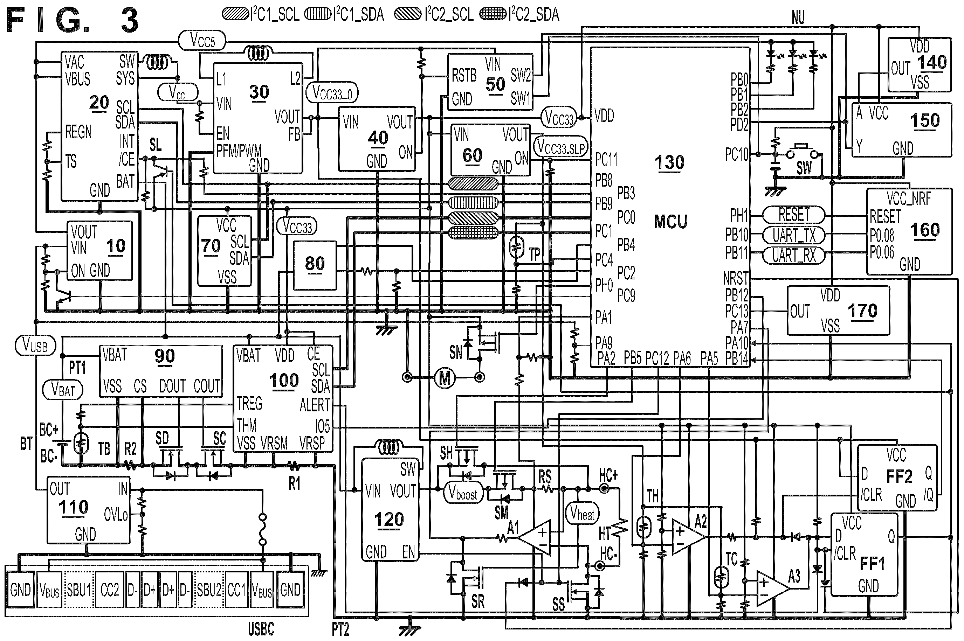

The operations of components that form the power supply unit 1 will be described with reference to Fig. 3. The positive electrode of the battery BT is electrically connected to a first power supply connector BC+, and the negative electrode of the battery BT is electrically connected to a second power supply connector BC-. The potential of the positive electrode of the battery BT can be supplied to the VBAT terminal of a protection circuit 90, the VBAT terminal of a battery monitoring circuit 100, the VIN terminal of a transformation circuit 120, the BAT terminal of a charge circuit 20, and the potential input terminal of a switch circuit 80.

The protection circuit 90 measures, using a resistor R2 arranged in a path to which a current output from the battery BT flows, the current flowing to the path, and protects the battery BT in accordance with the current. The protection circuit 90 measures the output voltage of the battery BT using the input to the VBAT terminal, and protects the battery BT in accordance with the measured output voltage. The battery monitoring circuit 100 (to be also referred to as a power supply monitoring circuit) can measure the state of the battery BT using a resistor R1 arranged in the path to which the current output from the battery BT flows.

An overvoltage protection circuit 110 receives a voltage V_{BUS} supplied from the connector USBC serving as a power feeder connector and outputs a voltage V_{USB} to a V_{USB} line. The overvoltage protection circuit 110 can function as a protection circuit which, even if the voltage V_{BUS} supplied from the connector USBC is a voltage larger than a prescribed voltage value, lowers to the voltage V_{BUS} to the prescribed voltage value and supplies it to the output side of the overvoltage protection circuit 110. The prescribed voltage value may be set based on a voltage value input to the OVLo terminal.

The transformation circuit 120 is a DC/DC converter that transforms a power supply voltage V_{BAT} supplied from the battery BT to generate a heater voltage V_{BOOST} used to drive the heater HT. The transformation circuit 120 can be a step-up circuit, a step-up/down circuit, or a step-down circuit. The heater HT is arranged to heat the aerosol source. The positive-side terminal of the heater HT can electrically be connected to a first heater connector HC+, and the negative-side terminal of the heater HT can electrically be connected to a second heater connector HC-.

The heater HT may be attached to the power supply unit 1 in a form in which the heater can be detached only when destroyed (for example, soldering) or in a form in which the heater can be detached without destruction. Note that in this specification, electrical connection using "connector" will be described as any of a form in which elements can be separated from each other only when destroyed and a form in which elements can be separated from each other without destruction, unless otherwise specified.

An MCU (Micro Controller Unit) 130 is a processor-based control circuit including a processor capable of executing a program, memories, an interface, and the like, and controls the operation of the power supply unit 1. The program to be executed by the MCU 130 can exist in an internal memory or a nonvolatile memory 70, or in both of them.

The MCU 130 controls supply of power to the heater HT configured to heat the aerosol source using the power supplied from the battery BT. In another viewpoint, the MCU 130 controls heat generation of the heater HT configured to heat the aerosol source using the power supplied from the battery BT. In still another viewpoint, the MCU 130 controls supply of power to the heater HT and a charge operation of the battery BT.

When causing the heater HT to generate heat, the MCU 130 turns on a switch SH and a switch SS and turns off a switch SM. Thus, the heater voltage V_{BOOST} can be supplied from the transformation circuit 120 to the heater HT via the switch SH. When measuring the temperature or resistance of the heater HT, the MCU 130 turns off the switch SH and turns on the switch SM and the switch SS. Thus, the heater voltage V_{BOOST} can be supplied from the transformation circuit 120 to the heater HT via the switch SM.

When measuring the temperature or resistance of the heater HT, an operational amplifier A1 supplies an output according to the voltage between the positive-side terminal and the negative-side terminal of the heater HT, in other words, the voltage between the first heater connector HC+ and the second heater connector HC- to the PA7 terminal of the MCU 130. The operational amplifier A1 may be understood as a measurement circuit that measures the resistance value or temperature of the heater HT.

A shunt resistor RS can be arranged in a path that electrically connects the switch SM and the first heater connector HC+. The resistance value of the shunt resistor RS can be decided such that a switch SR is ON in a period in which the heater HT is heated, and the switch SR is OFF in a period in which the temperature or resistance value of the heater HT is measured. If the switch SR is formed by an n-channel MOSFET, the drain terminal of the switch SR is connected to the output terminal of the operational amplifier A1, the drain terminal of the switch SR is connected to the output terminal of the operational amplifier A1, the gate terminal of the switch SR is connected between the shunt resistor RS and the first heater connector HC+, and the source terminal of the switch SR is connected to the ground potential. A voltage having a value obtained by dividing the heater voltage V_{BOOST} mainly by the shunt resistor RS and the heater HT is input to the gate terminal of the switch SR. The resistance value of the shunt resistor RS can be decided such that the value obtained by the voltage division is equal to or larger than the threshold voltage of the switch SR. In addition, a current flowing to the heater HT in a case where the switch SH is turned off by the shunt resistor RS, and the switch SM and the switch SS are turned on is smaller than a current flowing to the heater HT in a case where the switch SH and the switch SS are turned on, and the switch SM is turned off. It is therefore possible to suppress the change of the temperature of the heater HT caused by the current flowing to the heater HT when measuring the temperature or resistance of the heater HT.

A load switch 10 electrically disconnects the VIN terminal from the VOUT terminal when low level is input to the ON terminal. When high level is input to the ON terminal, the load switch 10 electrically connects the VIN terminal and the VOUT terminal and outputs a voltage Vccs from the VOUT terminal to a Vccs line. The voltage value of the voltage Vccs is, for example, 5.0 [V]. The V_{CC5} line is connected to the VBUS terminal and the VAC terminal of the charge circuit 20 to be described later and the light emitting unit NU. Note that the collector terminal of an npn-type bipolar transistor is connected to the ON terminal of the load switch 10. The emitter terminal of the bipolar transistor is connected to ground, and the base terminal is connected to the PC9 terminal of the MCU 130. That is, the MCU 130 adjusts the potential of the PC9 terminal, thereby controlling opening/closing of the load switch 10 via the bipolar transistor.

The charge circuit 20 has a charge mode. In the charge mode, the charge circuit 20 electrically connects the SYS terminal and the BAT terminal internally. Hence, the charge voltage can be supplied from the BAT terminal to the battery BT via a first conductive path PT1 using the voltage Vccs supplied to the VBUS terminal via the Vccs line. The charge circuit 20 preferably generates an appropriate charge voltage by stepping down the voltage Vccs. The charge mode can be enabled or activated by supplying low level to the ICE terminal. A Vcc line is connected to the VIN terminal and the EN terminal of a transformation circuit 30 to be described later.

The charge circuit 20 can have a power-pass function. If the power-pass function is set enabled, the charge circuit 20 supplies a voltage Vcc to the Vcc line using the voltage Vccs supplied to the VBUS terminal via the Vccs line or the power supply voltage V_{BAT} supplied from the battery BT to the BAT terminal via the first conductive path PT1. More specifically, if the power-pass function is set enabled in a state in which the voltage V_{USB} can be used, the charge circuit 20 electrically connects the VBUS terminal and the SW terminal internally, and supplies the voltage Vcc to the Vcc line using the voltage Vccs supplied via the Vccs line. Also, if the power-pass function is set enabled in a state in which the voltage V_{USB} cannot be used, the charge circuit 20 electrically connects the BAT terminal and the SW terminal internally, and supplies the voltage Vcc to the Vcc line using the power supply voltage V_{BAT} supplied from the battery BT to the BAT terminal via the first conductive path PT1.

The charge circuit 20 has an OTG (On-The-GO) function. If the OTG function is set enabled, the charge circuit 20 supplies the voltage Vccs from the VBUS terminal to the Vccs line using the power supply voltage V_{BAT} supplied from the battery BT to the BAT terminal via the first conductive path PT1. When generating the voltage Vccs from the power supply voltage V_{BAT}, the charge circuit 20 preferably supplies the voltage Vccs by stepping up the power supply voltage V_{BAT} such that the voltage supplied to the light emitting unit NU is the same as or similar to a voltage obtained when generating the voltage Vccs from the voltage V_{USB}. With this configuration, the operation of the light emitting unit NU is stabilized. When high level is supplied to the ICE terminal, the charge circuit 20 can operate using one function of the power-pass function and the OTG function, which is set by default or is set enabled by the MCU 130.

The transformation circuit 30 is a DC/DC converter that can be a step-up circuit, a step-up/down circuit, or a step-down circuit, and is enabled by supplying the voltage Vcc to the Vcc line. More specifically, the transformation circuit 30 is enabled by inputting a high-level signal to the EN terminal. Since the VIN terminal and the EN terminal are connected to the Vcc line, the transformation circuit 30 is enabled by supplying the voltage Vcc to the Vcc line. The transformation circuit 30 supplies a voltage V_{CC33_0} from the VOUT terminal to a V_{CC33_0} line. The voltage value of the voltage V_{CC33_0} is, for example, 3.3 [V]. The V_{CC33_0} line is connected to the VIN terminal of a load switch 40 to be described later, the VIN terminal and the RSTB terminal of a reboot controller 50 to be described later, and the VCC terminal and the D terminal of an FF2.

The load switch 40 electrically disconnects the VIN terminal from the VOUT terminal when low level is input to the ON terminal. When high level is input to the ON terminal, the load switch 40 electrically connects the VIN terminal and the VOUT terminal and outputs a voltage V_{CC33} from the VOUT terminal to a V_{CC33} line. The voltage value of the voltage V_{CC33} is, for example, 3.3 [V]. The V_{CC33} line is connected to the VIN terminal of a load switch 60 to be described later, the VCC terminal of the nonvolatile memory 70, the VDD terminal and the CE terminal of the battery monitoring circuit 100 to be described later, the VDD terminal of the MCU 130, the VDD terminal of a detector 140 to be described later, the VCC terminal of a Schmitt trigger circuit 150 to be described later, the VCC_NRF terminal of a communication interface circuit 160 to be described later, the VDD terminal of the detector 170 to be described later, the VCC terminal and the D terminal of an FF1, the positive power supply terminal of the operational amplifier A 1, the positive power supply terminal of an operational amplifier A2 to the described later, and the positive power supply terminal of an operational amplifier A3 to the described later. The VIN terminal of the load switch 40 is electrically connected to the VOUT terminal of the transformation circuit 30, and the voltage V_{CC33_0} is supplied from the transformation circuit 30. In order not to make the circuit boards of the power supply unit 1 complex, the voltage value of the voltage V_{CC33_0} and the voltage value of the voltage V_{CC33} are preferably substantially equal.

The reboot controller 50 outputs low level from the RSTB terminal when low level is supplied to the SW1 terminal and the SW2 terminal for a predetermined time. The RSTB terminal is electrically connected to the ON terminal of the load switch 40. Hence, when low level is supplied to the SW1 terminal and the SW2 terminal of the reboot controller 50 for a predetermined time, the load switch 40 stops outputting the voltage Vccss from the VOUT terminal. If the output of the voltage Vccss from the VOUT terminal of the load switch 40 stops, supply of the voltage Vccss to the VDD terminal (power supply terminal) of the MCU 130 is shut off, and therefore, the MCU 130 stops the operation.

Here, if the front panel 11 is detached from the power supply unit 1, low level is supplied from the detector 140 to the SW2 terminal of the reboot controller 50 via the Schmitt trigger circuit 150. When the switch SW is pressed, low level is supplied to the SW1 terminal of the reboot controller 50. Hence, if the switch SW is pressed in a state in which the front panel 11 is detached from the power supply unit 1 (the state shown in Fig. 1(f)), low level is supplied to the SW1 terminal and the SW2 terminal of the reboot controller 50. If low level is supplied to the SW1 terminal and the SW2 terminal continuously for a predetermined time (for example, several sec), the reboot controller 50 recognizes that a reset or reactivation instruction is input to the power supply unit 1. The reboot controller 50 preferably no longer outputs low level from the RSTB terminal after outputting low level from the RSTB terminal. If the reboot controller 50 outputs low level from the RSTB terminal, low level is input to the ON terminal of the load switch 40, the load switch 40 electrically disconnects the VIN terminal from the VOUT terminal, and the voltage V_{CC33} is no longer output to the V_{CC33} line. Thus, the MCU 130 stops the operation. After that, if the reboot controller 50 no longer outputs low level from the RSTB terminal, the voltage V_{CC33_0} of high level is input to the ON terminal of the load switch 40. Hence, the load switch 40 electrically connects the VIN terminal and the VOUT terminal and outputs the voltage V_{CC33} from the VOUT terminal to the V_{CC33} line again. Thus, the MCU 130 that has stopped the operation can be reactivated.

The load switch 60 electrically disconnects the VIN terminal from the VOUT terminal when low level is input to the ON terminal. When high level is input to the ON terminal, the load switch 60 electrically connects the VIN terminal and the VOUT terminal and outputs a voltage V_{CC33_SLP} from the VOUT terminal to a V_{CC33_SLP} line. The voltage value of the voltage V_{CC33_SLP} is, for example, 3.3 [V]. The V_{CC33_SLP} line is connected to the puff thermistor TP to be described later, the heater thermistor TH to be described later, and the case thermistor TC to be described later. The ON terminal of the load switch 60 is electrically connected to the PC11 terminal of the MCU 130. The MCU 130 changes the logic level of the PC11 terminal from high level to low level when shifting the power supply unit 1 to a sleep mode, and changes the logic level of the PC11 terminal from low level to high level when shifting the power supply unit 1 from the sleep mode to an active mode. In other words, the voltage V_{CC33_SLP} cannot be used in the sleep mode, and can be used when shifting from the sleep mode to the active mode. In order not to make the circuit boards of the power supply unit 1 complex, the voltage value of the voltage V_{CC33_SLP} and the voltage value of the voltage Vccss are preferably substantially equal.

The power supply unit 1 can include the puff thermistor TP (for example, an NTC thermistor or a PTC thermistor) that forms a puff sensor configured to detect a puff (suction) operation by the user. The puff thermistor TP can be arranged to detect, for example, a temperature change in an air channel caused by puff. Note that the puff thermistor TP is merely an example of a puff sensor. In place of the puff thermistor TP, a microphone capacitor, a pressure sensor, a flow rate sensor, a flow velocity sensor, or the like may be used as the puff sensor. The power supply unit 1 may include a vibrator M. The vibrator M can be activated by turning on, for example, a switch SN. The switch SN can be formed by a transistor, and a control signal can be supplied from the PH0 terminal of the MCU 130 to the base or gate of the transistor. Note that the power supply unit 1 may include a driver configured to control the vibrator M.

The power supply unit 1 can include the heater thermistor TH (for example, an NTC thermistor or a PTC thermistor) configured to detect the temperature of the heater HT. The temperature of the heater HT may be detected indirectly by detecting the temperature near the heater HT. The operational amplifier A2 can output a voltage according to the resistance value of the thermistor TH, in other words, a voltage according to the temperature of the heater HT.

The power supply unit 1 can include the case thermistor TC (for example, an NTC thermistor or a PTC thermistor) configured to detect the temperature of the housing (case) 2 of the power supply unit. The temperature of the case 2 may be detected indirectly by detecting the temperature near the case 2. An operational amplifier A3 outputs a voltage according to the resistance value of the thermistor TC, in other words, a voltage according to the temperature of the case 2.

The detector 140 can be configured to detect that the front panel 11 is detached from the power supply unit 1. The output of the detector 140 can be supplied to the SW2 terminal of the reboot controller 50 and the PD2 terminal of the MCU 130 via the Schmitt trigger circuit 150. One terminal of the switch SW can be connected to the V_{CC33} line, the SW1 terminal of the reboot controller 50, and the PC10 terminal of the MCU 130. The other terminal of the switch SW can be connected to the ground potential. Thus, when the switch SW is pressed, low level can be supplied to the SW1 terminal of the reboot controller 50 and the PC10 terminal of the MCU 130. When the switch SW is not pressed, high level can be supplied to the SW1 terminal of the reboot controller 50 and the PC10 terminal of the MCU 130.

The detector 170 can be configured to detect opening/closing of the slider 13. The output of the detector 170 can be supplied to the PC13 terminal of the MCU 130. Each of the detectors 140 and 170 can be formed by, for example, an integrated circuit (Hall IC) using a Hall element.

The communication interface circuit 160 provides, to the MCU 130, a function of wirelessly communicating with an external apparatus such as a smartphone, a portable telephone, or a personal computer. The communication interface circuit 160 may be, for example, a communication interface circuit complying with one or more arbitrary wireless communication standards such as Bluetooth^{®}.

The FF1 and FF2 are holding circuits that hold, as low level or high level, 1-bit information (0 or 1) representing whether an abnormality is detected or not. FF is short for flip-flop. The FF2 outputs a value obtained by inverting the value of held information from the /Q terminal. The FF1 outputs the value of held information from the Q terminal. The FF1 and the FF2 are each preferably a D flip-flop IC.

Each of the FF1 and FF2 includes a /CLR terminal, and changes the value of held information to 0 (low level) if the input level of the /CLR terminal changes from high level to low level. Note that the change of the input level of the /CLR terminal from low level to high level does not affect the value of the held information.

In this embodiment, power is supplied to the FF1 and FF2 via different power supply lines. That is, the voltage V_{CC33} is supplied to the VCC terminal (power supply terminal) of the FF1, and the voltage V_{CC33_0} is supplied to the VCC terminal (power supply terminal) of the FF2. The voltage V_{CC33_0} is continuously supplied even during a period in which supply of the voltage V_{CC33} that is the power supply of the MCU 130 is temporarily stopped in a reset operation. For this reason, even if the reset operation of the power supply unit 1 is executed, information (the outputs of the Q and /Q terminals) held by the FF2 is held without being erased. On the other hand, since power is supplied to the FF1 via a power supply line that supplies power to the MCU 130, information held by the FF1 is erased at the time of the reset operation.

In the FF1 and the FF2, the input to the VCC terminal is input to the D terminal as well. Hence, high level is always input to the D terminal during the operation of the FF1 and FF2. The FF1 and FF2 each include a synchronization terminal (not shown), and if the input to the synchronization terminal changes from low level to high level, hold the input level of the D terminal. If the power supply unit 1 is normally operating, the FF1 and FF2 hold high level.

A voltage that changes in accordance with the resistance value of the heater thermistor TH is supplied to the inverting input of the operational amplifier A2, and a reference voltage is supplied to the noninverting input. The reference voltage is designed such that the voltage of the noninverting input is higher than the voltage of the inverting input in a state in which the heater HT is not overheated, and the voltage of the inverting input is higher than the voltage of the noninverting input in a state in which the heater HT is overheated. Hence, the output of the operational amplifier A2 is at high level in the state in which the heater HT is not overheated (normal state) and at low level in the state in which the heater HT is overheated (abnormal state).

The output of the operational amplifier A2 is connected to the /CLR terminal of the FF2. The output of the operational amplifier A2 is also connected to the D terminal and the /CLR terminal of the FF1 via a diode in the reverse direction. In other words, the output of the operational amplifier A2 is connected to the cathode of the diode, and the D terminal and the /CLR terminal of the FF1 are connected to the anode of the diode. If the temperature of the heater HT is in the normal state, the input to the /CLR terminal of the FF2 is at high level. If the input to the /CLR terminal is at high level, the output of the Q terminal of the FF2 maintains the initial state. That is, the Q terminal of the DD2 outputs high level. The voltage V_{CC33_0} is input to the D terminal of the FF2, and if there is no abnormality at the time of activation, the FF2 holds the input level of the D terminal in the initial state. Hence, if the temperature of the heater HT is in the normal state, the Q terminal output of the FF2 is at high level, and the /Q terminal output is at low level.

If the heater HT changes to an overheated state, the output of the operational amplifier A2 changes to low level. Thus, the input to the /CLR terminal of the FF2 changes to low level. If the /CLR terminal changes to low level, the FF2 is forcibly initialized, the output of the Q terminal changes to low level, and the output of the /Q terminal changes to high level. The output of the /Q terminal of the FF2 is supplied to the PB14 terminal of the MCU 130. For this reason, the MCU 130 can detect that the heater HT is in the overheated state if the signal input to the PB14 terminal is switched from low level to high level.

The case thermistor TC is arranged at a position close to the inner surface of the case 2. Alternatively, the case thermistor TC is arranged at a position in contact with the inner surface of the case 2. If the relationship between the actual temperature of the case 2 and the resistance value of the case thermistor TC is measured in advance, the resistance value of the case thermistor TC can be used as the temperature of the case 2.

A voltage that changes in accordance with the resistance value of the case thermistor TC is supplied to the inverting input of the operational amplifier A3, and a reference voltage is supplied to the noninverting input. The reference voltage is designed such that the voltage of the noninverting input is higher than the voltage of the inverting input in a state in which the case 2 of the power supply unit 1 is not at a high temperature, and the voltage of the inverting input is higher than the voltage of the noninverting input in a state in which the case 2 of the power supply unit 1 is at a high temperature. Hence, the output of the operational amplifier A3 is at high level in the state in which the case 2 is not at a high temperature (normal state) and at low level in the state in which the case 2 is at a high temperature (abnormal state).

The output of the operational amplifier A3 is connected to the /CLR terminal and the D terminal of the FF1. If the temperature of the case 2 is in a normal state, the input to the /CLR terminal of the FF1 is at high level. If the input to the /CLR terminal is at high level, the output of the Q terminal of the FF1 maintains the initial state. The voltage V_{CC33} is input to the D terminal of the FF1. If there is no abnormality at the time of activation, the FF1 holds the input level of the D terminal in the initial state. Hence, if the temperature of the case 2 is in the normal state, the output from the Q terminal of the FF1 is at high level. If the temperature of the case 2 is high, the output of the operational amplifier A3 changes to low level. Thus, the input to the /CLR terminal of the FF1 changes to low level. If the /CLR terminal changes to low level, the FF1 is forcibly initialized, and the output of the Q terminal changes to low level. The output from the Q terminal of the FF1 is supplied to the PA10 terminal of the MCU 130 and the base of the switch SL. For this reason, the MCU 130 can detect that the temperature of the case 2 is high if the signal input to the PA10 terminal is switched from high level to low level. If the output from the Q terminal of the FF1 is switched from high level to low level, the switch SL is turned on. The collector of the switch SL is connected to the ICE terminal of the charge circuit 20, and the emitter of the switch SL is connected to the V_{CC33} line. If the switch SL is turned on, the voltage V_{CC33} is input to the ICE terminal of the charge circuit 20. Thus, the signal supplied to the ICE terminal of the charge circuit 20 is switched to high level, and the charge circuit 20 stops the operation.

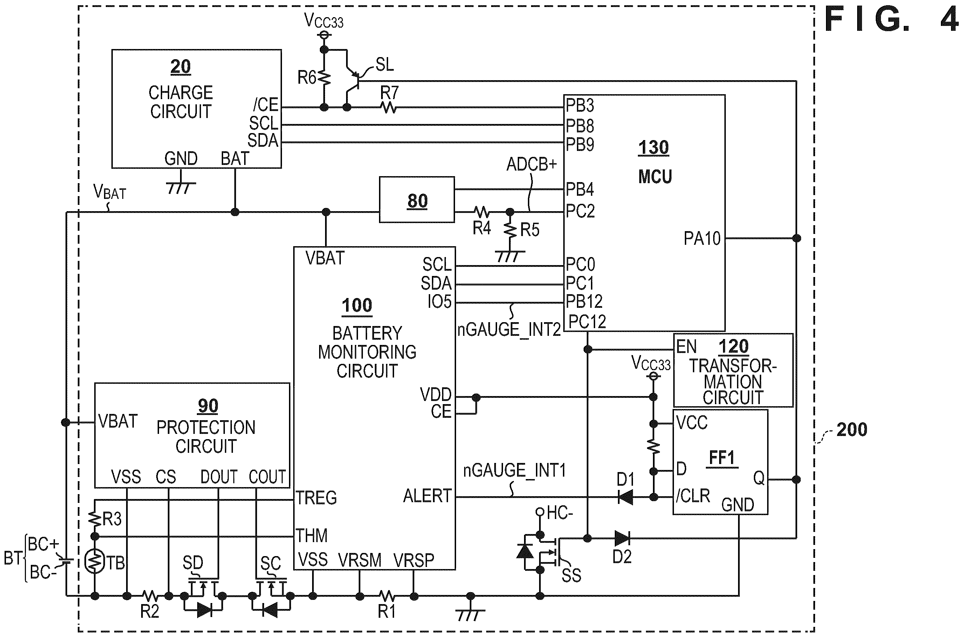

Fig. 4 is a circuit diagram showing components concerning an operation for protecting the power supply unit 1 based on information about the battery BT, which are extracted from the constituent elements described with reference to Fig. 3. The operation for protecting the power supply unit 1 will simply be referred to as a protection operation hereinafter. The protection operation may include, for example, both a direct operation of stopping the current flowing to the battery BT and an indirect operation of transmitting a signal for requesting another circuit to execute the direct operation. As will be described below in detail, the protection operation may include at least temporarily restricting at least one of charge of the battery BT and power supply from the battery BT to the heater HT. Restricting the operation concerning the battery BT may include totally making the operation inexecutable (for example, setting the charge amount or the supply amount to zero), or may include partially making the operation inexecutable (for example, decreasing the charge amount or the supply amount). The constituent elements of the power supply unit 1 protected by the protection operation may be arbitrary constituent elements such as the battery BT and the MCU 130. In the embodiment to be described below, the MCU 130, the battery monitoring circuit 100, the protection circuit 90, the FF1, and the charge circuit 20 execute individual protection operations. The constituent elements for the protection operation will collectively be expressed as a protection control unit 200. The MCU 130, the battery monitoring circuit 100, the protection circuit 90, the FF1, and the charge circuit 20 included in the protection control unit 200 are formed by separate circuits

The protection circuit 90 measures the current flowing to the battery BT and the voltage of the battery BT. More specifically, the CS terminal of the protection circuit 90 is connected to one terminal of the resistor R2, and the VSS terminal of the protection circuit 90 is connected to the other terminal of the resistor R2. The resistance value of the resistor R2 is stored in the protection circuit 90 in advance. The protection circuit 90 divides the voltage between the VSS terminal and the CS terminal by the resistance value of the resistor R2, thereby measuring the current flowing to the resistor R2. The resistor R2 is connected to the second power supply connector BC- to which the negative electrode of the battery BT is connected. For this reason, the current flowing to the resistor R2 has correlation with the current flowing to the battery BT. The protection circuit 90 compares the magnitude of the potential of the VSS terminal with that of the potential of the CS terminal, thereby determining the direction of the current flowing to the resistor R2. Thus, the protection circuit 90 can determine whether the battery BT is being charged or discharged.

The VBAT terminal of the protection circuit 90 is connected to the first power supply connector BC+ to which the positive electrode of the battery BT is connected, and the VSS terminal of the protection circuit 90 is connected to the second power supply connector BC- to which the negative electrode of the battery BT is connected. For this reason, the voltage between the VBAT terminal and the VSS terminal of the protection circuit 90 equals the voltage (power supply voltage V_{BAT}) of the battery BT. Hence, the protection circuit 90 can measure the voltage of the battery BT by measuring the voltage of the VBAT terminal.

The protection circuit 90 can turn off a switch SD by switching the output from the DOUT terminal from high level to low level. The gate of the switch SD is electrically connected to the DOUT terminal of the protection circuit. The gate of the switch SD functions as the control terminal of the switch SD. The switch SD switches the conductive state of its own based on the input to the gate. If the switch SD is turned off, a current path for discharging the battery BT is cut off. Hence, discharge from the battery BT is restricted. Thus, the switch SD functions as a discharge cutoff switch.

The protection circuit 90 can turn off a switch SC by switching the output from the COUT terminal from high level to low level. The gate of the switch SC is electrically connected to the COUT terminal of the protection circuit. The gate of the switch SC functions as the control terminal of the switch SC. The switch SC switches the conductive state of its own based on the input to the gate. If the switch SC is turned off, a current path for charging the battery BT is cut off. Hence, charge of the battery BT is restricted. Thus, the switch SC functions as a charge cutoff switch. The protection circuit 90 maintains the output from the DOUT terminal and the output from the COUT terminal at high level during the operation, and if the state of the battery BT satisfies a predetermined condition to be described later, switches control signals supplied from these outputs to the switches SC and SD to low level.

The charge circuit 20 has a function of charging the battery BT, as described above with reference to Fig. 3. The BAT terminal of the charge circuit 20 is connected to the first power supply connector BC+ to which the positive electrode of the battery BT is connected. The charge circuit 20 supplies power from the BAT terminal to the battery BT, thereby charging the battery BT. The charge circuit 20 monitors the potential of the BAT terminal, and if the potential satisfies a predetermined condition, restricts the supply of power to the battery BT.

The SCL terminal of the charge circuit 20 is connected to the PB8 terminal of the MCU 130, and the SDA terminal of the charge circuit 20 is connected to the PB9 terminal of the MCU 130. The charge circuit 20 performs I²C communication with the MCU 130 via the SCL terminal and the SDA terminal. More specifically, a clock is communicated via the SCL terminal of the charge circuit 20, and data is communicated via the SDA terminal of the charge circuit 20. Since data transmission can be performed by both the MCU 130 and the charge circuit 20, data can be communicated bidirectionally between the charge circuit 20 and the MCU 130.

An enable signal is supplied to the ICE terminal of the charge circuit 20. If low level is supplied to the ICE terminal, the charge circuit 20 performs the charge operation. If high level is supplied to the ICE terminal, the charge circuit 20 does not perform the charge operation.

The battery monitoring circuit 100 monitors states associated with various physical quantities of the battery BT. In some embodiments, the battery monitoring circuit 100 monitors the temperature of the battery BT, the voltage of the battery BT, and the current flowing to the battery BT. Instead, the battery monitoring circuit 100 may monitor only some of the physical quantities or monitor other physical quantities.

A resistor R3 and a battery thermistor TB are connected in series between the TREG terminal of the battery monitoring circuit 100 and the ground potential to which the negative electrode of the battery BT is connected. Furthermore, the THM terminal of the battery monitoring circuit 100 is connected to a node between the resistor R3 and the battery thermistor TB. The battery thermistor TB is a thermistor (temperature sensor) configured to measure the temperature of the battery BT and is arranged near the battery BT. The resistance value of the battery thermistor TB changes in accordance with a predetermined temperature characteristic. The relationship between the actual temperature of the battery BT and the resistance value of the battery thermistor TB is measured in advance and stored in the battery monitoring circuit 100 in advance. The resistance value of the resistor R3 also stored in the battery monitoring circuit 100 in advance. The battery monitoring circuit 100 can measure the temperature of the battery BT by measuring the voltage between the TREG terminal and the THM terminal or the voltage between the THM terminal and the VSS terminal.

The VRSM terminal of the battery monitoring circuit 100 is connected to one terminal of the resistor R1, and the VRSP terminal of the battery monitoring circuit 100 is connected to the other terminal of the resistor R1. The resistance value of the resistor R1 is stored in the battery monitoring circuit 100 in advance. The battery monitoring circuit 100 divides the voltage between the VRSM terminal and the VRSP terminal by the resistance value of the resistor R1, thereby measuring the current flowing to the resistor R1. The resistor R2 is connected in series with the second power supply connector BC- to which the negative electrode of the battery BT is connected. For this reason, the current flowing to the resistor R2 has correlation with the current flowing to the battery BT. The battery monitoring circuit 100 compares the magnitude of the potential of the VRSM terminal with that of the potential of the VRSP terminal, thereby determining the direction of the current flowing to the resistor R1. Thus, the battery monitoring circuit 100 can determine whether the battery BT is being charged or discharged.

The VBAT terminal of the battery monitoring circuit 100 is connected to the first power supply connector BC+ to which the positive electrode of the battery BT is connected, and the VSS terminal of the battery monitoring circuit 100 is connected to the second power supply connector BC- via the switches SD and SC and the resistor R2. The VSS terminal of the battery monitoring circuit 100 is also connected to the ground potential. For this reason, the voltage between the VBAT terminal and the VSS terminal of the battery monitoring circuit 100 substantially equals the voltage of the battery BT. Hence, the battery monitoring circuit 100 can measure the voltage of the battery BT by measuring the voltage of the VBAT terminal.

The SCL terminal of the battery monitoring circuit 100 is connected to the PC0 terminal of the MCU 130, and the SDA terminal of the battery monitoring circuit 100 is connected to the PC1 terminal of the MCU 130. The battery monitoring circuit 100 performs I²C communication with the MCU 130 via the SCL terminal and the SDA terminal. More specifically, a clock is communicated via the SCL terminal of the battery monitoring circuit 100, and data is communicated via the SDA terminal of the battery monitoring circuit 100. Since data transmission can be performed by both the MCU 130 and the battery monitoring circuit 100, data can be communicated bidirectionally between the battery monitoring circuit 100 and the MCU 130.

The VDD terminal and the CE terminal of the battery monitoring circuit 100 are connected to the V_{CC33} line. The operating power of the battery monitoring circuit 100 is supplied to the VDD terminal of the battery monitoring circuit 100. An enable signal is supplied to the CE terminal of the battery monitoring circuit 100. The battery monitoring circuit 100 performs an operation if high level is supplied to the CE terminal, and does not perform an operation if low level is supplied to the CE terminal. For this reason, the battery monitoring circuit 100 performs an operation when the voltage V_{CC33} is being supplied to the V_{CC33} line.

The IO5 terminal of the battery monitoring circuit 100 is connected to the PB12 terminal of the MCU 130. The battery monitoring circuit 100 outputs an nGAUGE_INT2 signal to the MCU 130 via the 105 terminal. This signal is communicated in one direction from the battery monitoring circuit 100 to the MCU 130. When the measurement result concerning the battery BT is normal, the battery monitoring circuit 100 maintains the nGAUGE_INT2 signal at high level. If an abnormality occurs in the battery BT, the battery monitoring circuit 100 switches the nGAUGE_INT2 signal to low level. Hence, the nGAUGE_INT2 signal of low level may be considered as an error signal for notifying an error. Detailed conditions for the battery monitoring circuit 100 to transmit an error signal to the MCU 130 will be described later.

The ALERT terminal of the battery monitoring circuit 100 is connected to the /CLR terminal and the D terminal of the FF1 via a diode D1 in the reverse direction. In other words, the cathode of the diode D1 is connected to the ALERT terminal of the battery monitoring circuit 100, and the anode of the diode D1 is connected to the /CLR terminal and the D terminal of the FF1. The battery monitoring circuit 100 outputs an nGAUGE_INT1 signal to the FF1 via the ALERT terminal. This signal is communicated in one direction from the battery monitoring circuit 100 to the FF1. When the measurement result concerning the battery BT is normal, the battery monitoring circuit 100 maintains the nGAUGE_INT1 signal at high level. If an abnormality occurs in the battery BT, the battery monitoring circuit 100 switches the nGAUGE_INT1 signal to low level. Hence, the nGAUGE_INT1 signal of low level may be considered as an error signal for notifying an error. Detailed conditions for the battery monitoring circuit 100 to transmit an error signal to the FF1 will be described later.

If the nGAUGE_INT1 signal is switched from high level to low level, the input to the /CLR terminal and the D terminal of the FF1 also changes to low level. Thus, the output from the Q terminal of the FF1 also changes to low level, as described above.

The Q terminal of the FF 1 is connected to the gate of the switch SS via a diode D2 in the reverse direction. In other words, the cathode of the diode D2 is connected to the Q terminal of the FF1, and the anode of the diode D2 is connected to the gate of the switch SS. If the output from the Q terminal of the FF1 changes to low level, the switch SS is turned off. If the switch SS is turned off, the negative terminal HC- of the heater HT is disconnected from the ground potential, and therefore, energization of the heater HT is cut off.

The Q terminal of the FF1 is also connected to the base of the switch SL. If the output from the Q terminal of the FF1 changes to low level, the switch SL is turned on. If the switch SL is turned on, a resistor R6 no longer contributes to division of the voltage V_{CC33} with a resistor R7, and the input to the ICE terminal of the charge circuit 20 changes to high level like the voltage V_{CC33}. Hence, charge is inhibited. In this way, by changing the output of the FF1 to low level, charge/discharge of the battery BT and energization to the heater HT can be inhibited without interposing the MCU 130, and the circuit can be protected.

The Q terminal of the FF1 is also connected to the PA10 terminal of the MCU 130. The MCU 130 can detect that the FF1 notifies an error in accordance with switching of the input to the PA10 terminal from high level to low level. Accordingly, the MCU 130 may urge, using the light emitting unit NU or the vibrator M, the user to perform a reset operation.

The MCU 130 can communicate with the battery monitoring circuit 100 by I²C communication, as described above. The MCU 130 acquires information about the battery BT from the battery monitoring circuit 100 and executes the protection operation based on the information.

The PC2 terminal of the MCU 130 is connected to the switch circuit 80 via a resistor R4. If the input from the PB4 terminal of the MCU 130 changes to high level, the switch circuit 80 is set in the conductive state, and the PC2 terminal of the MCU 130 and the positive electrode of the battery BT are rendered conductive. Thus, the power supply voltage V_{BAT} divided by the resistors R4 and R5 is supplied to the PC2 terminal of the MCU 130. In the following description, the power supply voltage V_{BAT} divided by the resistors R4 and R5 will also be referred to as a voltage ADCB+. Hence, the MCU 130 switches the output of the PB4 terminal to high level, thereby acquiring the voltage of the battery BT without interposing the battery monitoring circuit 100.

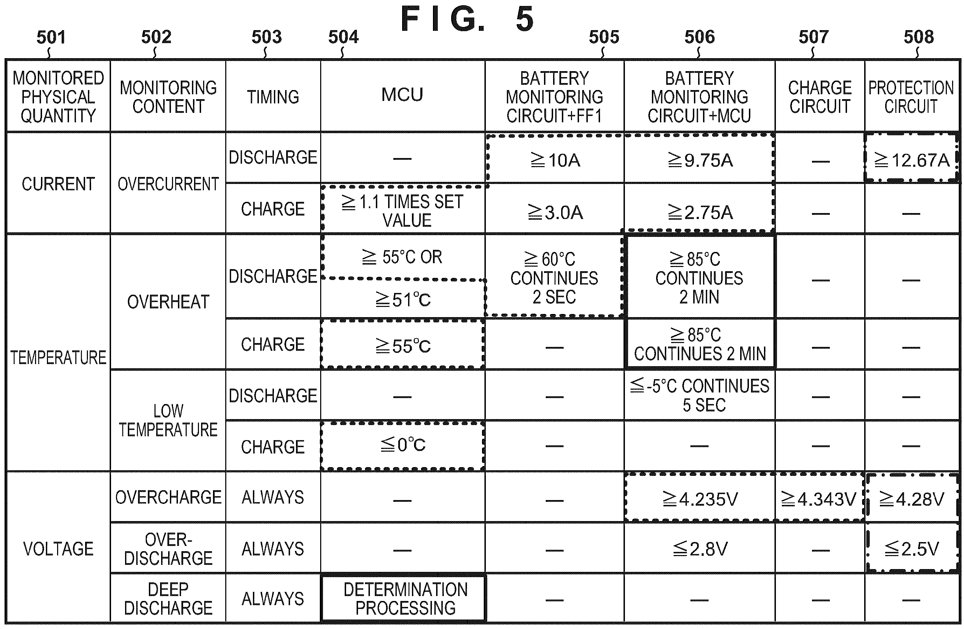

Conditions for the protection control unit 200 to start the protection operation will be described with reference to Fig. 5. As will be described below, the constituent elements of the protection control unit 200, that is, the battery monitoring circuit 100, the protection circuit 90, and the charge circuit 20 execute individual protection operations in accordance with individual conditions.

A column 501 in Fig. 5 shows the physical quantities of the battery BT monitored by the protection control unit 200. The protection control unit 200 monitors the current, the temperature, and the voltage of the battery BT. A column 502 shows monitoring contents by the protection control unit 200. The protection control unit 200 monitors an overcurrent concerning the current of the battery BT, overheat and low temperature concerning the temperature of the battery BT, and overcharge, overdischarge, and deep discharge concerning the voltage of the battery BT. Deep discharge indicates a state in which discharge of the battery BT progresses beyond overdischarge. Overdischarge indicates a state in which the output voltage of the battery BT falls below a discharge end voltage.

A column 503 in Fig. 5 shows the timings of monitoring the physical quantity in the column 501. In a row of "charge", it is determined whether the physical quantity of the battery BT satisfies a condition only when the battery BT is being charged by the charge circuit 20. In a row of "discharge", it is determined whether the physical quantity of the battery BT satisfies a condition only when the battery BT is not being charged by the charge circuit 20. In particular, it may be determined whether a condition is satisfied only when power is being supplied from the battery BT to the heater HT (for example, when the heater voltage V_{BOOST} is being applied to the heater HT). In a row of "always", it is determined whether the physical quantity of the battery BT satisfies a condition irrespective of whether the battery BT is being charged by the charge circuit 20.

A column 504 shows conditions for the MCU 130 to periodically monitor the physical quantity of the battery BT and execute the protection operation based on the monitoring result. As will be described later, the MCU 130 periodically acquires the physical quantity of the battery BT from the battery monitoring circuit 100 via I²C communication and executes the protection operation based on the acquired physical quantity of the battery BT. A column 505 shows conditions for the battery monitoring circuit 100 to monitor the physical quantity of the battery BT and request the FF1 to execute the protection operation based on the monitoring result. A column 506 shows conditions for the battery monitoring circuit 100 to monitor the physical quantity of the battery BT and request the MCU 130 to execute the protection operation based on the monitoring result. As will be described later, the protection operation execution request to the MCU 130 by the battery monitoring circuit 100 is done by an interrupt signal. Upon receiving the interrupt signal, the MCU 130 starts monitoring the physical quantity of the battery BT. A column 507 shows conditions for the charge circuit 20 to monitor the physical quantity of the battery BT and execute the protection operation based on the monitoring result. A column 508 shows conditions for the protection circuit 90 to monitor the physical quantity of the battery BT and execute the protection operation based on the monitoring result.

Conditions to start the protection operation are defined by combining the timings in the column 503 and the conditions in the columns 504 to 508. For example, the uppermost item in the column 505 defines a condition that the protection operation is started when the current of the battery BT is 10 [A] or more at the time of discharge. Fig. 5 shows a plurality of conditions for the protection control unit 200 to start the protection operation. A set formed by these conditions will be referred to as a monitoring condition set hereinafter, and each element of the set will be referred to as a monitoring condition. If a monitoring condition included in the monitoring condition set is satisfied, the protection control unit 200 executes the protection operation. The contents of the protection operation to be executed change depending on which monitoring condition is satisfied. A numerical value in each monitoring condition shown in Fig. 5 is merely an example, and another numerical value may be used. The protection control unit 200 may not use some of the conditions shown in Fig. 5 as the monitoring conditions or may use conditions that are not shown in Fig. 5.

A frame of a thick line in Fig. 5 indicates the change destination of the state of the power supply unit 1 by the protection control unit 200 executing the protection operation. A frame of a solid line indicates a condition to change the power supply unit 1 to a failure state. A frame of a broken line indicates a condition to change the power supply unit 1 to a reset wait state. A frame of an alternate long and short dashed line indicates a condition to change the power supply unit 1 to a connection wait state.

The failure state indicates a state in which the power supply unit 1 cannot be changed to the normal state either by an operation of the power supply unit 1 or by an operation of the user (to be simply referred to as a user hereinafter) of the aerosol generation device including the power supply unit 1. The failure state also indicates a state in which charge/discharge of the battery BT is permanently inhibited. The normal state may indicate a state in which heating of the heater HT by the power supply unit 1 is enabled by an operation of the user. The failure state can be eliminated by, for example, repairing the power supply unit 1 at a factory. The failure state may be called a permanent failure state. The reset wait state indicates a state in which the power supply unit 1 can be changed to the normal state by the reset operation of the user. A detailed example of the reset operation will be described later. The connection wait state indicates a state in which the power supply unit 1 can be changed to the normal state by a user operation of connecting an external device to the connector USBC via a USB plug. The reset wait state and the connection wait state are states that need an error elimination operation by the user. For this reason, the reset wait state and the connection wait state can generically be referred to as a user operation wait state. The user operation wait state is a state in which the power supply unit 1 cannot be changed to the normal state by an operation of the power supply unit 1 but can be changed to the normal state by an operation of the user. That is, to eliminate the restriction on discharge or charge of the power supply restricted in the user operation wait state, an operation by the user is necessary.

An operation of the protection control unit 200 to change the power supply unit 1 to the reset wait state and a method of eliminating this will be described. In the protection control unit 200, the MCU 130 and the FF1 can change the power supply unit 1 to the reset wait state. Other circuits in the protection control unit 200 may request the MCU 130 or the FF1 to change to the reset wait state.

An operation of the MCU 130 to change the power supply unit 1 to the reset wait state will be described. The MCU 130 switches the output of the PC12 terminal of the MCU 130 from high level to low level. The switch SS is thus turned off, and the negative connector HC- of the heater HT is disconnected from the ground potential. The PC12 terminal of the MCU 130 is also connected to the EN terminal of the transformation circuit 120. For this reason, if the output of the PC 12 terminal of the MCU 130 is switched from high level to low level, the operation of the transformation circuit 120 is stopped, and application of the heater voltage V_{BOOST} to the heater HT is inhibited. With the above-described operation, power supply from the battery BT to the heater HT is restricted. Furthermore, the MCU 130 switches the output of the PB3 terminal of the MCU 130 from low level to high level. Since the ICE terminal of the charge circuit 20 thus changes to high level, the charge circuit 20 inhibits charge.

An operation of the FF1 to change the power supply unit 1 to the reset wait state will be described. The FF1 switches the output of the Q terminal of the FF1 from high level to low level. The switch SS is thus turned off, and the negative connector HC- of the heater HT is disconnected from the ground potential. The Q terminal of the FF1 is also connected to the EN terminal of the transformation circuit 120 via the diode D2 in the reverse direction. For this reason, if the output of the D terminal of the FF1 is switched from high level to low level, the operation of the transformation circuit 120 is stopped, and application of the heater voltage V_{BOOST} to the heater HT is inhibited. With the above-described operation, power supply from the battery BT to the heater HT is restricted. Furthermore, if the output of the D terminal of the FF1 is switched from high level to low level, the ICE terminal of the charge circuit 20 changes to high level, as described above, and therefore, the charge circuit 20 inhibits charge.

An operation of the charge circuit 20 to change the power supply unit 1 to the reset wait state will be described. If the voltage V_{BAT} of the battery BT satisfies a monitoring condition, the charge circuit 20 requests, via the I²C communication, the MCU 130 to change the power supply unit 1 to the reset wait state. In response to the request, the MCU 130 executes the above-described operation, thereby changing the power supply unit 1 to the reset wait state.

A method of eliminating the reset wait state will be described next. If both (1) detachment of the front panel 11 and (2) pressing of the switch SW for a predetermined time longer than the heating start instruction are detected, the power supply unit 1 according to this embodiment recognizes that the reset operation by the user is performed.

More specifically, these conditions are detected by the reboot controller 50. The SW1 terminal of the reboot controller 50 is connected to the switch SW, and the SW2 terminal is connected to the Schmitt trigger circuit 150 that outputs a signal representing attachment/detachment of the front panel 11. If the switch SW is pressed in a state in which the front panel 11 is detached, both the inputs to the SW1 terminal and the SW2 terminal change to low level. If this state continues for a predetermined time, the reboot controller 50 starts the reset operation.

The reboot controller 50 monitors whether the state in which both the SW1 terminal and the SW2 terminal are at low level continues until a user-settable reboot delay time (for example, 1 to 20 sec) elapses. During the reboot delay time, the MCU 130 notifies the user of the reset using the light emitting unit NU and the vibrator M.

If the state in which both the SW1 terminal and the SW2 terminal are at low level continues for the reboot delay time, the reboot controller 50 changes the output of the RSTB terminal to low level. Thus, the ON terminal of the load switch 40 changes to low level, and the supply of the voltage Vccss from the VOUT terminal of the load switch 40 and the voltage V_{CC33_SLP} from the VOUT terminal of the load switch 60 stops. This cuts off power supply to the MCU 130, and the MCU 130 stops the operation.

If a predetermined time (for example, 0.4 sec) elapses after the RSTB terminal is set to low level, the reboot controller 50 no longer automatically sets the RSTB terminal to low level. Hence, the voltage V_{CC33_0} is input to the ON terminal of the load switch 40 via the V_{CC33_0} line. The supply of the voltage V_{CC33} from the load switch 40 is resumed, and the MCU 130 is activated. That is, the MCU 130 is activated if the state in which power is not supplied to the VDD terminal changes to a state in which power is supplied. If the MCU 130 is activated, the power supply unit 1 is set in the sleep state or charge state. The voltage V_{CC33_SLP} is not supplied at this point of time. If the MCU 130 is reactivated, a failure such as freeze that has occurred in the MCU 130 may be solved.

An operation of the protection control unit 200 to change the power supply unit 1 to the connection wait state and a method of eliminating this will be described. In the protection control unit 200, the protection circuit 90 can change the power supply unit 1 to the connection wait state. Other circuits in the protection control unit 200 may request the protection circuit 90 to change to the connection wait state.

An operation of the protection circuit 90 to change the power supply unit 1 to the connection wait state will be described. During the normal state of the power supply unit 1, the protection circuit 90 maintains the output of the DOUT terminal and the output of the COUT terminal at high level. To change the power supply unit 1 to the connection wait state, the protection circuit 90 switches the output of the DOUT terminal and the output of the COUT terminal to low level. Since the switches SD and SC are thus turned off, in a state in which no external device is connected to the connector USBC via the USB plug, power supply to all circuits other than the protection circuit 90 in the power supply unit 1 is stopped.

A method of eliminating the connection wait state will be described next. If an external device is connected to the connector USBC via the USB plug, the voltage V_{USB} is generated by the overvoltage protection circuit 110. Thus, the potential of the ON terminal of the load switch 10 changes to high level, and the voltage Vccs is output from the VOUT terminal of the load switch 10 to the Vccs line. Since the input to the ICE terminal of the charge circuit 20 is at high level at this point of time, the charge circuit 20 generates the voltage Vcc by the power-pass function. After that, the voltage V_{CC33_0} and the voltage V_{CC33} are generated as described above with reference to Fig. 3, and the MCU 130 is activated. After the activation, the MCU 130 determines whether the battery BT is deep-charged by an operation to be described later. If the battery BT is deep-charged, the power supply unit 1 is changed to the failure state. Otherwise, the MCU 130 maintains the output of the PB3 of the MCU 130 at low level. The input to the ICE terminal of the charge circuit 20 is thus maintained at low level, and power is supplied from the BAT terminal of the charge circuit 20 to the VBAT terminal of the protection circuit 90. If the residual quantity of the battery BT is recovered, the protection circuit 90 switches the outputs from the DOUT terminal and the COUT terminal to high level. The power supply unit 1 thus changes to the normal state.

In the above-described example, the protection circuit 90 turns off both the switch SC and the switch SD to change the power supply unit 1 to the connection wait state. Instead, the protection circuit 90 may turn off only one of the switch SC and the switch SD. For example, upon detecting overcharge of the battery BT, the protection circuit 90 may turn off the switch SC functioning as a charge cutoff switch and keep the switch SD functioning as a discharge cutoff switch on. On the other hand, upon detecting overdischarge of the battery BT, the protection circuit 90 may turn off the switch SD functioning as a discharge cutoff switch and keep the switch SC functioning as a charge cutoff switch on.

An operation of the protection control unit 200 to change the power supply unit 1 to the failure state will be described next. The MCU 130 stops the power-pass function (the function of outputting, from the SYS terminal, power to be input to the VBUS terminal and the BAT terminal) of the charge circuit 20 via I²C communication with the charge circuit 20. Thus, the voltage Vcc is no longer supplied from the charge circuit 20, and supply of the voltages V_{CC33_0}, V_{CC33}, and V_{CC33_SLP} derived from the voltage Vcc stops. Hence, power is not supplied to most circuits including the MCU 130, and the power supply unit 1 substantially stops the operation. Since power to the reboot controller 50 is not supplied, the reset operation is not accepted. When the power-pass function of the charge circuit 20 is stopped, discharge from the battery BT and charge of the battery BT cannot be executed. Also, even if an external device is connected to the connector USBC via the USB plug, the MCU 130 is not activated because the voltage Vcc is not generated. To further improve the safety of the power supply unit 1, before the power-pass function of the charge circuit 20 is stopped, the MCU 130 may inhibit discharge from the battery BT and charge of the battery BT by the above-described method.

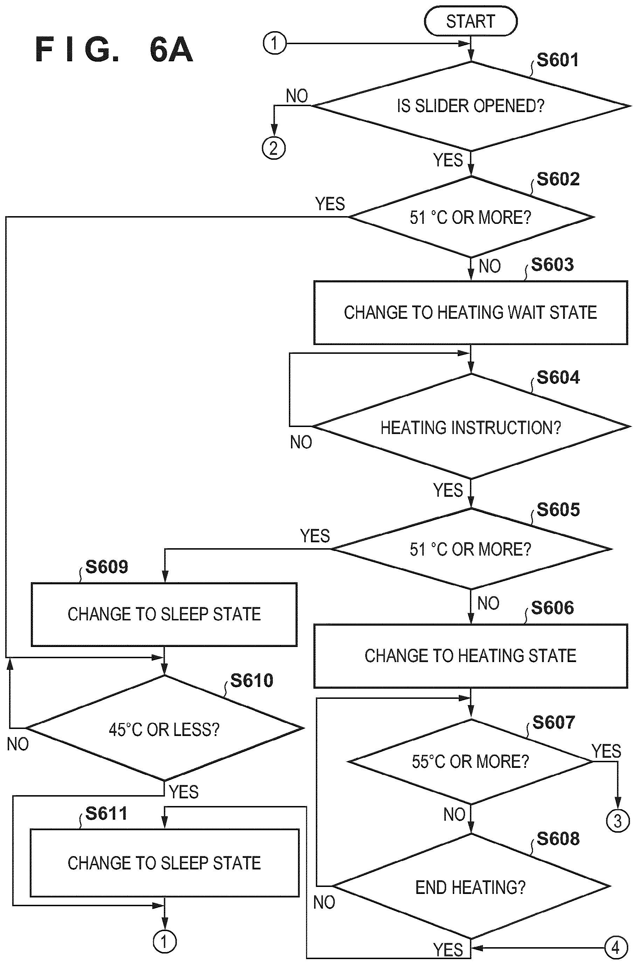

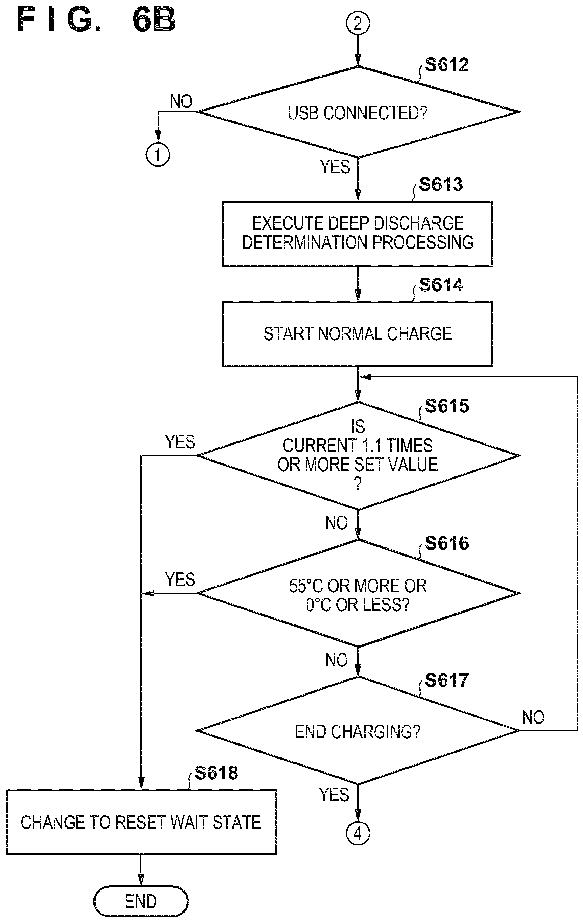

The monitoring conditions explained with reference to Fig. 5 will be described in detail next. The monitoring condition set defined in the column 504 shown in Fig. 5 will be described first with reference to the flowcharts of Figs. 6A and 6B. This monitoring condition set is a set of conditions for the MCU 130 to periodically monitor the physical quantity of the battery BT and execute the protection operation based on the monitoring result, as described above. At the start of the operation shown in Figs. 6A and 6B, the power supply unit 1 is in the sleep state. The sleep state is a state in which the user can use the power supply unit 1 and is a state in which the user is not using the power supply unit 1 (more specifically, the switch SW is not pressed for a predetermined time, and no external device is connected to the connector USBC via the USB plug). The sleep state is a state in which power consumption of the battery BT is reduced when the user is not using the power supply unit 1. During the sleep state of the power supply unit 1, the MCU 130 does not generate the voltage V_{CC33_SLP} described with reference to Fig. 3 (that is, the output of the PC11 terminal is at low level). In addition, during the sleep state of the power supply unit 1, the MCU 130 monitors signals from other circuits. For example, during the sleep state, the MCU 130 monitors the input to the PC10 terminal whose value changes in accordance with pressing of the switch SW, the input to the PC13 terminal whose value changes in accordance with opening of the slider 13, the input to the PC 12 terminal to which the nGAUGE_INT2 signal from the IO5 terminal of the battery monitoring circuit is supplied, the input from the PA10 terminal to which the signal from the Q terminal of the FF1 is supplied, the input to the PA9 terminal whose value changes in accordance with connection of an external device to the connector USBC via the USB plug, and the like.

In step S601, the MCU 130 determines whether the slider 13 is opened. If the slider 13 is opened ("YES" in step S601), the MCU 130 advances the process to step S602, and otherwise ("NO" in step S601), advances the process to step S612. That the slider 13 is opened can be detected based on switching of the signal supplied from the OUT terminal of the detector 170 to the PC13 terminal of the MCU 130 to high level.

In step S602, the MCU 130 determines whether the temperature of the battery BT is 51°C or more. If the temperature of the battery BT is 51°C or more ("YES" in step S602), the MCU 130 advances the process to step S610, and otherwise ("NO" in step S602), advances the process to step S603. The MCU 130 can acquire the temperature of the battery BT from the battery monitoring circuit 100 via I²C communication. Even in determination of the temperature of the battery BT in other steps in Figs. 6A and 6B, the MCU 130 can similarly acquire the temperature of the battery BT. In the determination of step S602, the step results in YES if the condition satisfies an equation (if the temperature of the battery BT is exactly 51°C). However, the step may result in NO in this case. This also applies to other conditions to be described below.

If NO in step S602 (that is, if the temperature of the battery BT is less than 51°C), the MCU 130 determines that the battery BT is normal, and changes the power supply unit 1 to a heating wait state in step S603. The heating wait state is a state in which the aerosol source can be heated in accordance with a user instruction. To change to the heating wait state, the MCU 130 sets the output of the PC11 terminal at high level, thereby generating the voltage V_{CC33_SLP}.

On the other hand, if YES in step S602 (that is, if the temperature of the battery BT is 51°C or more), the MCU 130 determines that the temperature of the battery BT is not suitable for the change to the heating wait state. In this case, the MCU 130 waits until the temperature of the battery BT lowers to 45°C or less in step S610 while maintaining the power supply unit 1 in the sleep state. More specifically, in step S610, the MCU 130 determines whether the temperature of the battery BT is 45°C or less. If the temperature of the battery BT is 45°C or less ("YES" in step S610), the MCU 130 returns the process to step S601, and otherwise ("NO" in step S610), repeats step S610. Hence, the power supply unit 1 for which the temperature of the battery BT is determined to be 51°C or more can change to a state other than the sleep state when the temperature of the battery BT is 45°C or less.

After the power supply unit 1 is changed to the heating wait state in step S603, in step S604, the MCU 130 determines whether a heating instruction is performed by the user. If a heating instruction is performed by the user ("YES" in step S604), the MCU 130 advances the process to step S605, and otherwise ("NO" in step S604), returns the process to step S604. The heating instruction can be detected when the input to the PC10 terminal of the MCU 130 is thus switched to low level by pressing the switch SW. Note that if the heating instruction is not performed for a predetermined time, the MCU 130 may advance the process to step S611.

In step S605, the MCU 130 determines whether the temperature of the battery BT is 51°C or more. If the temperature of the battery BT is 51°C or more ("YES" in step S605), the MCU 130 advances the process to step S609, and otherwise ("NO" in step S605), advances the process to step S606.

If NO in step S605 (that is, if the temperature of the battery BT is less than 51°C), the MCU 130 determines that the battery BT is normal, and changes the power supply unit 1 to a heating state in step S606. The heating state is a state in which the aerosol source is being heated. To change to the heating state, the MCU 130 sets the output of the PC12 terminal at high level, thereby activating the transformation circuit 120 and turning on the switch SS. After that, the MCU 130 sets the output of the PA2 terminal at low level, thereby turning on the switch SH. A closed circuit is thus formed between the battery BT and the heater H. Also, the MCU 130 may perform temperature control of the heater HT during the heating state of the power supply unit 1. The temperature control of the heater HT may be feedback control based on the output of the operational amplifier A1 during the ON state of the switch SS or the input to the PA6 terminal to which the heater thermistor TH is connected. The feedback control may be implemented by PID control. A gain that is at least one component of PID control may be zero. The duty ratio of the switch SH, which is calculated as the manipulated variable of PID control, may be implemented by PWM control or may be implemented by PFM control.

On the other hand, if YES in step S605 (that is, if the temperature of the battery BT is 51°C or more), the MCU 130 determines that the temperature of the battery BT is not suitable for the change to the heating state. In this case, the MCU 130 changes the power supply unit 1 to the sleep state in step S609 and waits until the temperature of the battery BT lowers to 45°C or less in step S610.

During the heating state of the power supply unit 1, in step S607, the MCU 130 determines whether the temperature of the battery BT is 55°C or more. If the temperature of the battery BT is 55°C or more ("YES" in step S607), the MCU 130 advances the process to step S618, and otherwise ("NO" in step S607), advances the process to step S608.

If NO in step S607 (that is, if the temperature of the battery BT is less than 55°C), the MCU 130 determines that the battery BT is normal, and maintains the power supply unit 1 in the heating state. On the other hand, if YES in step S607 (that is, if the temperature of the battery BT is 55°C or more), the MCU 130 determines that an error occurs in the battery BT, and changes the power supply unit 1 to the reset wait state in step S618.

In step S608, the MCU 130 determines whether to end the heating state. To end the heating state ("YES" in step S608), the MCU 130 advances the process to step S611, and otherwise ("NO" in step S608), returns the process to step S607. For example, if the slider 13 is closed, if the puff count by the user reaches the upper limit, or if a predetermined time elapses from the change to the heating state, the MCU 130 determines to end the heating state. If the heating state is ended, in step S611, the MCU 130 changes the power supply unit 1 to the sleep state.

Upon determining in step S601 that the slider 13 is not opened, in step S612, the MCU 130 determines whether an external device is connected to the connector USBC via the USB plug. If an external device is connected to the connector USBC via the USB plug ("YES" in step S612), the MCU 130 advances the process to step S613, and otherwise ("NO" in step S612), returns the process to step S601. That the external device is connected to the connector USBC via the USB plug can be detected when the PA9 terminal is switched to high level. Note that the MCU 130 may continuously execute the process of step S612 even after step S602, and if the determination ends with YES, stop the process from step S602 and advance the process to step S613.

In step S613, the MCU 130 executes deep discharge determination processing to be described later, thereby determining whether the battery BT is not in the deep discharge state. As will be described later, if the battery BT is not normal, the power supply unit 1 changes to the reset wait state or the failure state, and the processing is ended. If the battery BT is normal, in step S614, the MCU 130 starts normal charge to the battery BT. More specifically, the MCU 130 maintains the output of the PB3 terminal at low level, thereby maintaining power feed from the charge circuit 20 to the battery BT. In the normal charge, first, charge of the battery BT is started using a current of about 2,000 mA. The detailed current value may be notified from the MCU 130 to the charge circuit 20 via I²C communication.

In step S615, the MCU 130 determines whether the current flowing to the battery BT is 1.1 times or more the set value. If the current flowing to the battery BT is 1.1 times or more the set value ("YES" in step S615), the MCU 130 advances the process to step S618, and otherwise ("NO" in step S615), advances the process to step S616. The MCU 130 can acquire the current flowing to the battery BT from the battery monitoring circuit 100 via I²C communication. The set value is a current value determined in advance to perform CC (Constant-Current) charge in CCCV charge operations to be executed by the charge circuit 20.

If NO in S615 (that is, if the current flowing to the battery BT is less than 1.1 times the set value), the MCU 130 determines that the battery BT is normal, and continues the charge of the battery BT. On the other hand, if YES in step S615 (that is, if the current flowing to the battery BT is 1.1 times or more the set value), the MCU 130 determines that an error occurs in the battery BT, and in step S618, changes the power supply unit 1 to the reset wait state.

In step S616, the MCU 130 determines whether the temperature of the battery BT is 55°C or more or 0°C or less. If the temperature of the battery BT is 55°C or more or 0°C or less ("YES" in step S616), the MCU 130 advances the process to step S618, and otherwise ("NO" in step S616), advances the process to step S617.

If NO in step S616 (that is, if the temperature of the battery BT is higher than 0°C and lower than 55°C), the MCU 130 determines that the battery BT is normal, and continues the charge of the battery BT. On the other hand, if YES in step S616 (that is, if the temperature of the battery BT is 55°C or more or 0°C or less), the MCU 130 determines that an error occurs in the battery BT, and in step S618, changes the power supply unit 1 to the reset wait state. Note that the order of steps S615 and S616 may be reversed. Also, the MCU 130 may execute steps S615 and S616 simultaneously.

In step S617, the MCU 130 determines whether to end the charge. To end the charge ("YES" in step S617), the MCU 130 advances the process to step S611, and otherwise ("NO" in step S617), returns the process to step S615. For example, if the USB plug and the external device are removed from the connector USBC, or if the voltage of the battery BT reaches a predetermined voltage, the MCU 130 determines to end the charge. Also, the MCU 130 may determine to end the charge by receiving a notification indicating that the charge is ended from the charge circuit 20 via I²C communication. If the charge is ended, in step S611, the MCU 130 changes the power supply unit 1 to the sleep state.

As described above, concerning the physical quantity of the battery, the MCU 130 determines whether one of the conditions of the monitoring condition set including the plurality of monitoring conditions (steps S602, S605, S607, S613, S615, and S616) is satisfied. If one of several monitoring conditions (steps S607, S615, and S616) of these monitoring conditions is satisfied, the MCU 130 changes the power supply unit 1 to the reset wait state. If one of other several monitoring conditions (steps S602 and S605) of the monitoring conditions is satisfied, the MCU 130 maintains or changes the power supply unit 1 in or to the sleep state, and maintains the sleep state until a predetermined condition (step S610) is satisfied. According to the result of the deep discharge determination processing executed in step S614, the MCU 130 can change the power supply unit 1 to the error state or the reset wait state, as will be described later. Several conditions (steps S605, S607, S610, S615, and S616) shown in Figs. 6A and 6B are repetitively determined. The MCU 130 may determine these conditions at a predetermined period (for example, every second).

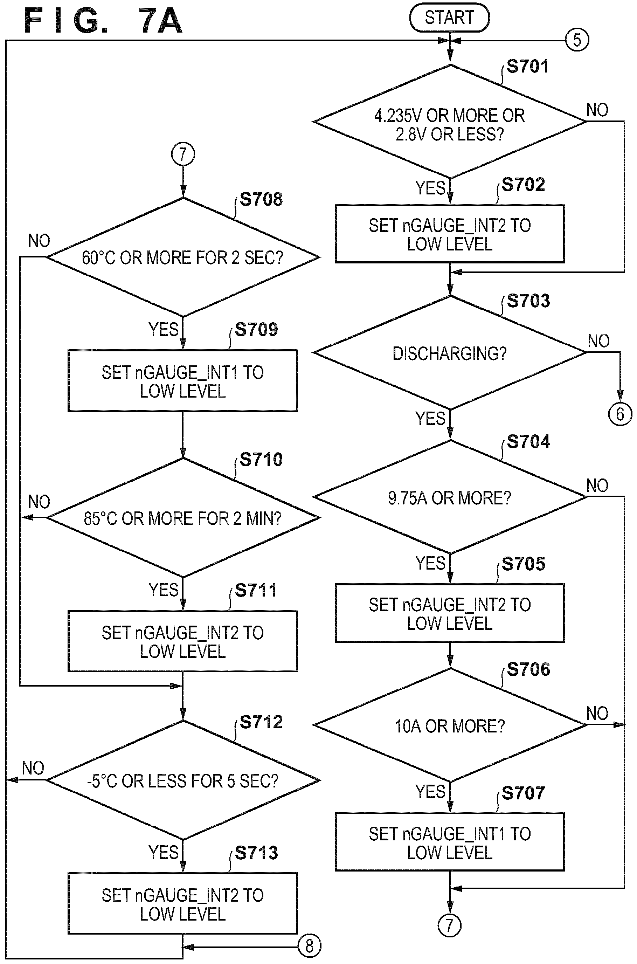

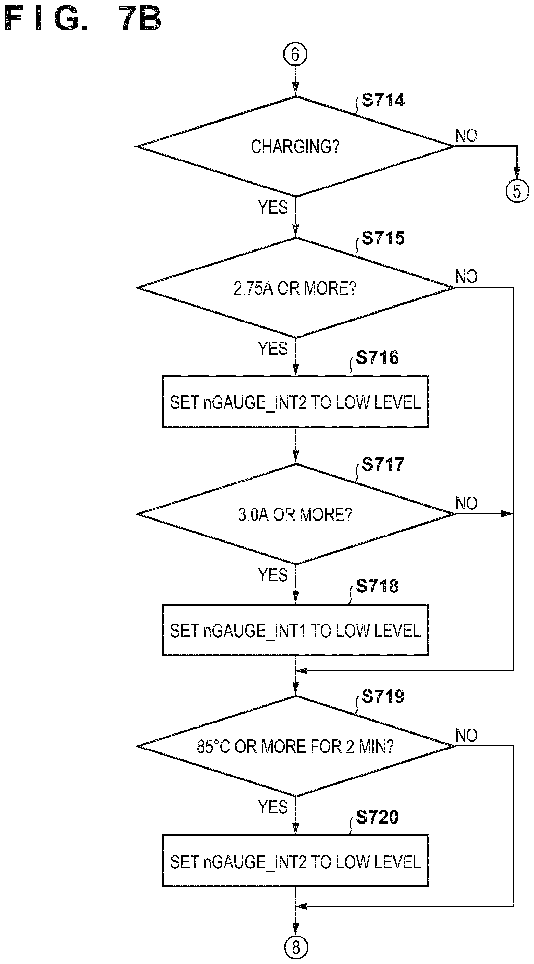

The monitoring condition set defined in the columns 505 and 506 shown in Fig. 5 will be described next with reference to the flowcharts of Figs. 7A and 7B. This monitoring condition set is a set of conditions for the battery monitoring circuit 100 to periodically monitor the physical quantity of the battery BT and for the FF1 or the MCU 130 to execute the protection operation based on the monitoring result, as described above. During the operation (that is, when the voltage V_{CC33} is being generated), the battery monitoring circuit 100 repeats the operation shown in Figs. 7A and 7B. Unless the conditions to be described below are satisfied, the battery monitoring circuit 100 maintains the nGAUGE_INT1 signal and the nGAUGE_INT2 signal at high level. After the nGAUGE_INT1 signal and the nGAUGE_INT2 signal at high level are changed to low level, the battery monitoring circuit 100 maintains these signals at low level until the battery monitoring circuit 100 is reset.

In step S701, the battery monitoring circuit 100 determines whether the voltage of the battery BT is 4.235 V or more or 2.8 V or less. If the voltage of the battery BT is 4.235 V or more or 2.8 V or less ("YES" in step S701), the battery monitoring circuit 100 advances the process to step S702, and otherwise ("NO" in step S701), advances the process to step S703. The battery monitoring circuit 100 can acquire the input to the VBAT terminal as the voltage of the battery BT. This also applies to acquisition of the voltage of the battery BT in other steps in Figs. 7A and 7B. If the voltage of the battery BT is 4.235 V or more or 2.8 V or less, the battery monitoring circuit 100 determines that the battery BT is not normal, and in step S702, switches the nGAUGE_INT2 signal to low level. After the execution of step S702, the battery monitoring circuit 100 may not execute subsequent processing in Figs. 7A and 7B.

In step S703, the battery monitoring circuit 100 determines whether the battery BT is being discharged. If the battery BT is being discharged ("YES" in step S703), the battery monitoring circuit 100 advances the process to step S704, and otherwise ("NO" in step S703), advances the process to step S714. The battery monitoring circuit 100 measures the direction of the current flowing to the resistor R1, thereby determining whether the battery BT is being discharged. The battery monitoring circuit 100 may determine YES in step S703 only in a case of a part of discharge of the battery BT. For example, the battery monitoring circuit 100 may determine YES in step S703 only when the power supply unit 1 is in the heating state. The battery monitoring circuit 100 may determine whether the power supply unit 1 is in the heating state based on information provided from the MCU 130 via I²C communication. If YES in step S703, the battery monitoring circuit 100 performs the processes of steps S704 to S713.

In step S704, the battery monitoring circuit 100 determines whether the current (discharge current) flowing to the battery BT is 9.75 A or more. If the current flowing to the battery BT is 9.75 A or more ("YES" in step S704), the battery monitoring circuit 100 advances the process to step S705, and otherwise ("NO" in step S704), advances the process to step S708. The battery monitoring circuit 100 can acquire the current flowing to the battery BT from the inputs to the VRSM terminal and the VRSP terminal. This also applies to acquisition of the current flowing to the battery BT in other steps in Figs. 7A and 7B. If the current flowing to the battery BT is 9.75 A or more, the battery monitoring circuit 100 determines that the battery BT is not normal, and in step S705, switches the nGAUGE_INT2 signal to low level.

In step S706, the battery monitoring circuit 100 determines whether the current flowing to the battery BT is 10 A or more. If the current flowing to the battery BT is 10 A or more ("YES" in step S706), the battery monitoring circuit 100 advances the process to step S707, and otherwise ("NO" in step S706), advances the process to step S708. If the current flowing to the battery BT is 10 A or more, the battery monitoring circuit 100 determines that the battery BT is not normal, and in step S707, switches the nGAUGE_INT1 signal to low level. After the execution of step S707, the battery monitoring circuit 100 may not execute subsequent processing in Figs. 7A and 7B.

In step S708, the battery monitoring circuit 100 determines whether a state in which the temperature of the battery BT is 60°C or more continues for 2 sec or more. If the state in which the temperature of the battery BT is 60°C or more continues for 2 sec or more ("YES" in step S708), the battery monitoring circuit 100 advances the process to step S709, and otherwise ("NO" in step S708), advances the process to step S712. The battery monitoring circuit 100 can acquire the temperature of the battery BT based on the input to the THM terminal. This also applies to acquisition of the temperature of the battery BT in other steps in Figs. 7A and 7B. If the state in which the temperature of the battery BT is 60°C or more continues for 2 sec or more, the battery monitoring circuit 100 determines that the battery BT is not normal, and in step S709, switches the nGAUGE_INT1 signal to low level. After the execution of step S709, the battery monitoring circuit 100 may not execute subsequent processing in Figs. 7A and 7B.

In step S710, the battery monitoring circuit 100 determines whether a state in which the temperature of the battery BT is 85°C or more continues for 2 min or more. If the state in which the temperature of the battery BT is 85°C or more continues for 2 min or more ("YES" in step S710), the battery monitoring circuit 100 advances the process to step S711, and otherwise ("NO" in step S710), advances the process to step S712. If the state in which the temperature of the battery BT is 85°C or more continues for 2 min or more, the battery monitoring circuit 100 determines that the battery BT is not normal, and in step S711, switches the nGAUGE_INT2 signal to low level. After the execution of step S711, the battery monitoring circuit 100 may not execute subsequent processing in Figs. 7A and 7B.

In step S712, the battery monitoring circuit 100 determines whether a state in which the temperature of the battery BT is -5°C or less continues for 5 sec or more. If the state in which the temperature of the battery BT is -5°C or less continues for 5 sec or more ("YES" in step S712), the battery monitoring circuit 100 advances the process to step S713, and otherwise ("NO" in step S712), returns the process to step S701. If the state in which the temperature of the battery BT is -5°C or less continues for 5 sec or more, the battery monitoring circuit 100 determines that the battery BT is not normal, and in step S713, switches the nGAUGE_INT2 signal to low level. After the execution of step S713, the battery monitoring circuit 100 may not execute subsequent processing in Figs. 7A and 7B.

In step S714, the battery monitoring circuit 100 determines whether the battery BT is being charged. If the battery BT is being charged ("YES" in step S714), the battery monitoring circuit 100 advances the process to step S715, and otherwise ("NO" in step S714), returns the process to step S701. The battery monitoring circuit 100 measures the direction of the current flowing to the resistor R1, thereby determining whether the battery BT is being charged. The battery monitoring circuit 100 may determine YES in step S714 only during charge to the battery BT (that is, only when power is supplied from the BAT terminal of the charge circuit to the battery BT). Instead, the battery monitoring circuit 100 may determine YES in step S714 if an external device is connected to the connector USBC via the USB plug. If YES in step S714, the battery monitoring circuit 100 performs the processes of steps S715 to S720.

In step S715, the battery monitoring circuit 100 determines whether the current (charge current) flowing to the battery BT is 2.75 A or more. If the current flowing to the battery BT is 2.75 A or more ("YES" in step S715), the battery monitoring circuit 100 advances the process to step S716, and otherwise ("NO" in step S715), advances the process to step S719. If the current flowing to the battery BT is 2.75 A or more, the battery monitoring circuit 100 determines that the battery BT is not normal, and in step S716, switches the nGAUGE_INT2 signal to low level.

In step S716, the battery monitoring circuit 100 determines whether the current flowing to the battery BT is 3.0 A or more. If the current flowing to the battery BT is 3.0 A or more ("YES" in step S717), the battery monitoring circuit 100 advances the process to step S718, and otherwise ("NO" in step S717), advances the process to step S719. If the current flowing to the battery BT is 3.0 A or more, the battery monitoring circuit 100 determines that the battery BT is not normal, and in step S718, switches the nGAUGE_INT1 signal to low level. After the execution of step S718, the battery monitoring circuit 100 may not execute subsequent processing in Figs. 7A and 7B.

In step S719, the battery monitoring circuit 100 determines whether a state in which the temperature of the battery BT is 85°C or more continues for 2 min or more. If the state in which the temperature of the battery BT is 85°C or more continues for 2 min or more ("YES" in step S719), the battery monitoring circuit 100 advances the process to step S720, and otherwise ("NO" in step S719), returns the process to step S701. If the state in which the temperature of the battery BT is 85°C or more continues for 2 min or more, the battery monitoring circuit 100 determines that the battery BT is not normal, and in step S720, switches the nGAUGE_INT2 signal to low level. After the execution of step S720, the battery monitoring circuit 100 may not execute subsequent processing in Figs. 7A and 7B.

As described above, concerning the physical quantity of the battery, the battery monitoring circuit 100 determines whether one of the conditions of the monitoring condition set including the plurality of monitoring conditions (steps S701, S704, S706, S708, S710, S712, S715, S717, and S719) is satisfied. If one of the conditions of the monitoring condition set is satisfied, the battery monitoring circuit 100 performs, as the protection operation, an operation of switching the nGAUGE_INT1 signal or the nGAUGE_INT2 signal to low level. The nGAUGE_INT1 signal is supplied to the FF1, and if the nGAUGE_INT1 signal is switched to low level, the FF1 changes the power supply unit 1 to the reset wait state, as described above. The nGAUGE_INT2 signal is supplied to the MCU 130, and if the nGAUGE_INT2 signal is switched to low level, the MCU 130 executes a protection operation to be described later.

In the method shown in Figs. 7A and 7B, the order of determining the monitoring conditions may be different from that shown in Figs. 7A and 7B or the processes may be executed concurrently. The battery monitoring circuit 100 may determine these conditions at a predetermined period (for example, every second). The battery monitoring circuit 100 may determine the monitoring conditions at a different period for each monitoring condition. For example, the battery monitoring circuit 100 may determine the monitoring condition of step S710 (a state in which a temperature of 85°C or more continues for 2 min or more) every minute.

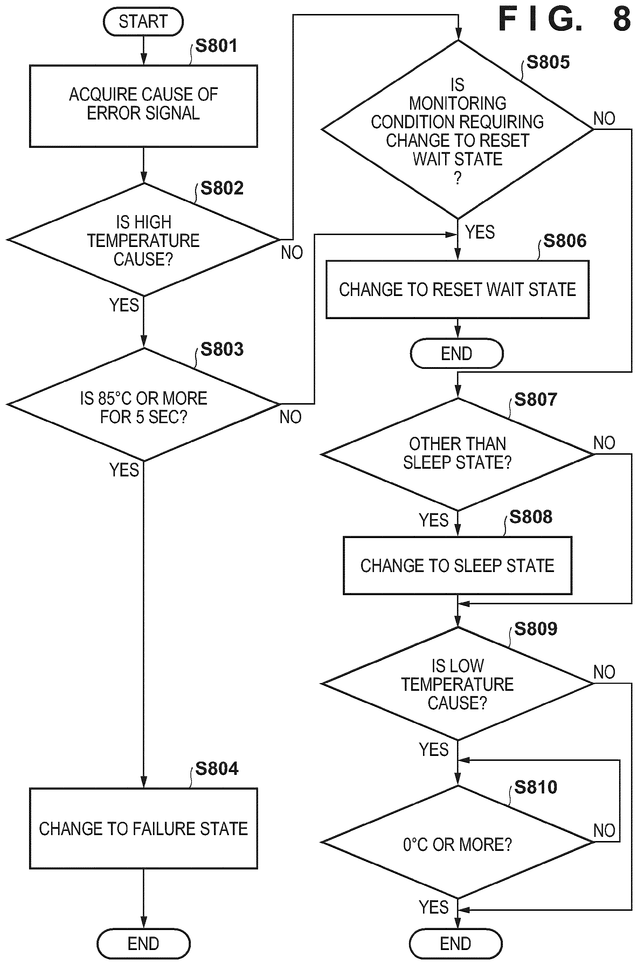

The operation of the MCU 130 in a case where the nGAUGE_INT2 signal of low level is supplied will be described next with reference to the flowchart of Fig. 8. Irrespective of the state (for example, the sleep state, the heating wait state, or the heating state) of the power supply unit 1, the MCU 130 may execute the operation shown in Fig. 8 if it can operate (that is, if operating power is supplied to the VDD terminal). When executing the operation shown in Fig. 8, the MCU 130 may interrupt another operation under execution, or may execute the operations concurrently. Thus, the MCU 130 processes the nGAUGE_INT2 signal of low level as an interrupt signal.

In step S801, the MCU 130 acquires the cause of switching of the nGAUGE_INT2 signal to low level from the battery monitoring circuit 100 via I²C communication. The battery monitoring circuit 100 may internally store the cause when the nGAUGE_INT2 signal is switched to low level, and return the cause in response to an inquiry from the MCU 130. Instead, the MCU 130 may newly acquire the information of the battery BT from the battery monitoring circuit 100 and determine which monitoring condition is satisfied.

In step S802, the MCU 130 determines whether the cause is a high temperature (that is, if the cause is step S710 or S719). If the cause is a high temperature ("YES" in step S802), the MCU 130 advances the process to step S803, and otherwise ("NO" in step S802), advances the process to step S805.

In step S803, the MCU 130 determines whether a state in which the temperature of the battery BT is 85°C or more continues for 5 sec or more. If the state in which the temperature of the battery BT is 85°C or more continues for 5 sec or more ("YES" in step S803), the MCU 130 advances the process to step S804, and otherwise ("NO" in step S803), advances the process to step S806. If the state in which the temperature of the battery BT is 85°C or more continues for 5 sec or more, the MCU 130 determines that the battery BT is not normal, and recovery by reset is impossible, and in step S804, changes the power supply unit 1 to the failure state. If the state in which the temperature of the battery BT is 85°C or more does not continue for 5 sec or more, the MCU 130 determines that recovery by reset is possible, and in step S806, changes the power supply unit 1 to the reset wait state.

In a case of a cause other than a high temperature, in step S805, the MCU 130 determines whether a monitoring condition that requires change to the reset wait state is satisfied. If a monitoring condition that requires change to the reset wait state is satisfied ("YES" in step S805), the MCU 130 advances the process to step S806, and otherwise ("NO" in step S805), advances the process to step S807. Monitoring conditions that require change to the reset wait state are the monitoring conditions surrounded by broken lines in the column 506 shown in Fig. 5, and more specifically, include a part (overvoltage) of step S701 and steps S704 and S715. The condition that requires change to the reset wait state can also be understood as a condition that, when satisfied, requires the MCU 130 to change the power supply unit 1 to the reset wait state. If a monitoring condition that requires change to the reset wait state is satisfied, the MCU 130 determines that recovery by reset is possible, and in step S806, changes the power supply unit 1 to the reset wait state.

If a monitoring condition that requires change to the reset wait state is not satisfied (more specifically, a part of step S701 (overdischarge) or step S712), in step S807, the MCU 130 determines whether the power supply unit 1 is in a state other than the sleep state. In this embodiment, a case where a monitoring condition that requires change to the reset wait state is not satisfied can be understood as a case where, in the monitoring conditions, a condition that is neither the condition for which the cause is a high temperature nor the monitoring condition that requires change to the reset wait state is satisfied. If the power supply unit 1 is in a state other than the sleep state ("YES" in step S807), the MCU 130 advances the process to step S808, and otherwise ("NO" in step S807), advances the process to step S809. In step S808, the MCU 130 changes the power supply unit 1 to the sleep state. Note that before the process advances to step S808 or in step S808, the MCU 130 may notify the user of the error via the light emitting unit NU or the vibrator M.

In step S809, the MCU 130 determines whether the cause is a low temperature (that is, if the cause is step S712). If the cause is a low temperature ("YES" in step S809), the MCU 130 advances the process to step S810, and otherwise ("NO" in step S809), ends the processing. If the cause is a low temperature, the MCU 130 determines that use of the battery BT in this state is inappropriate, and in step S810, waits until the temperature of the battery BT rises to 0°C or more while maintaining the power supply unit 1 in the sleep state. This is to suppress the progress of electrodeposition to be described later. More specifically, in step S810, the MCU 130 determines whether the temperature of the battery BT is 0°C or more. If the temperature of the battery BT is 0°C or more ("YES" in step S810), the MCU 130 ends the processing, and otherwise ("NO" in step S810), repeats step S810. Thus, the power supply unit 1 for which the temperature of the battery BT is determined to be - 5°C or less can change to a state other than the sleep state in accordance with the rise of the temperature to the battery BT to 0°C or more. In other words, unless the temperature of the battery BT is 0°C or more (unless "YES" in step S810), the power supply unit 1 is forcibly maintained in the sleep state.

Some conditions (steps S803 and S810) in Fig. 8 are repetitively determined. The MCU 130 may determine these conditions at a predetermined period (for example, every second).

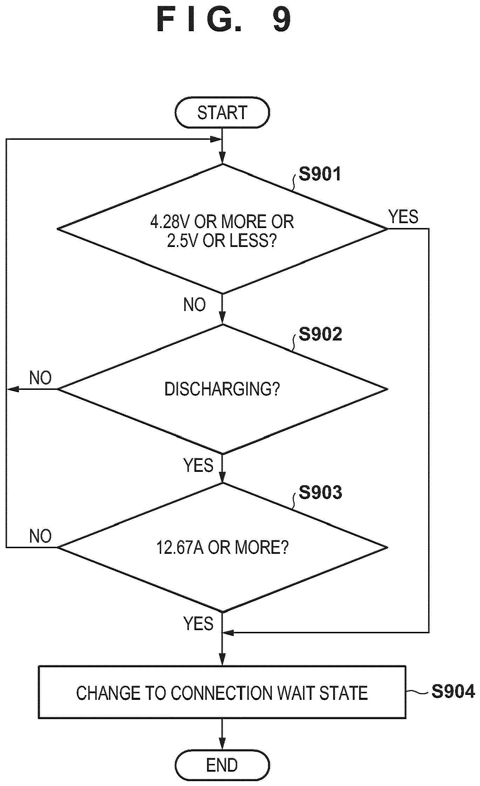

The monitoring condition set defined in the column 508 shown in Fig. 5 will be described with reference to the flowchart of Fig. 9. This monitoring condition set is a set of conditions for the protection circuit 90 to monitor the physical quantity of the battery BT and execute the protection operation based on the monitoring result, as described above. During the operation (that is, while the power supply voltage V_{BAT} exists), the protection circuit 90 repeats the operation shown in Fig. 9. Unless the conditions to be described below are satisfied, the protection circuit 90 maintains the DOUT signal and the COUT signal at high level.

In step S901, the protection circuit 90 determines whether the voltage of the battery BT is 4.28 V or more or 2.5 V or less. If the voltage of the battery BT is 4.8 V or more or 2.5 V or less ("YES" in step S901), the protection circuit 90 advances the process to step S904, and otherwise ("NO" in step S901), advances the process to step S902. The protection circuit 90 can acquire the input to the VBAT terminal as the voltage of the battery BT. If the voltage of the battery BT is 4.8 V or more or 2.5 V or less, the protection circuit 90 determines that the battery BT is not normal, and in step S904, changes the power supply unit 1 to the connection wait state. Note that if the process advances to step S904 because the voltage of the battery BT is 4.28 V or more, the protection circuit 90 may change, of the DOUT signal and the COUT signal, only the COUT signal to high level. In other words, in this case, the protection circuit 90 may turn off, of the switch SC and the switch SD, only the switch SC. Also, if the process advances to step S904 because the voltage of the battery BT is 2.5 V or less, the protection circuit 90 may change, of the DOUT signal and the COUT signal, only the DOUT signal to high level. In other words, in this case, the protection circuit 90 may turn off, of the switch SC and the switch SD, only the switch SD.

In step S902, the protection circuit 90 determines whether the battery BT is being discharged. If the battery BT is being discharged ("YES" in step S902), the protection circuit 90 advances the process to step S903, and otherwise ("NO" in step S902), returns the process to step S901. The protection circuit 90 measures the direction of the current flowing to the resistor R2, thereby determining whether the battery BT is being discharged.

In step S903, the protection circuit 90 determines whether the current (discharge current) flowing to the battery BT is 12.67 A or more. If the current flowing to the battery BT is 12.67 A or more ("YES" in step S903), the protection circuit 90 advances the process to step S904, and otherwise ("NO" in step S903), returns the process to step S901. The protection circuit 90 can acquire the current flowing to the battery BT from the inputs to the CS terminal and the VSS terminal. If the current flowing to the battery BT is 12.67 A or more, the protection circuit 90 determines that the battery BT is not normal, and in step S904, changes the power supply unit 1 to the connection wait state. Note that if the process advances to step S904 because the current (discharge current) flowing to the battery BT is 12.67 A or more, the protection circuit 90 may change, of the DOUT signal and the COUT signal, only the DOUT signal to high level. In other words, in this case, the protection circuit 90 may turn off, of the switch SC and the switch SD, only the switch SD.

As described above with reference to Figs. 7A, 7B, and 8, if the state in which the temperature of the battery BT is 85°C or more continues for 2 min or more, the battery monitoring circuit 100 transmits an error signal to the MCU 130 (steps S710 and S711). The MCU 130 acquires the temperature of the battery BT anew after the reception of the error signal, and if the state in which the temperature is 85°C or more continues for 5 sec or more, changes the power supply unit 1 to the failure state (steps S803 and S804). As described above, since the power supply unit 1 can be changed to the failure state based on the determination results by different circuits, the power supply unit 1 can appropriately be protected. In other words, since the change of the power supply unit 1 to the failure state is an irreversible change, erroneously performing the change can be suppressed.

The battery monitoring circuit 100 may determine, at a predetermined period, whether the state in which the temperature of the battery BT is 85°C or more continues for 2 min or more. For example, the battery monitoring circuit 100 may determine, at a period of 1 min, whether the state in which the temperature of the battery BT is 85°C or more continues for 2 min or more. In this case, if the state in which the temperature of the battery BT is 85°C or more is detected continuously twice, the battery monitoring circuit 100 may supply the error signal to the MCU 130. Note that the period for the battery monitoring circuit 100 to acquire the temperature of the battery BT may be shorter than 1 min. The MCU 130 may determine, at a predetermined period, whether the state in which the temperature of the battery BT is 85°C or more continues for 5 sec or more. For example, the MCU 130 may determine, at a period of 1 sec, whether the state in which the temperature of the battery BT is 85°C or more continues for 5 sec or more. In this case, if the state in which the temperature of the battery BT is 85°C or more is detected continuously five times, the MCU 130 changes the power supply unit 1 to the failure state. The period and the number of times are not limited to this example. In general, the battery monitoring circuit 100 monitors, at the first period (for example, 1 min), whether the temperature of the battery BT is 85°C or more, and if this state is obtained continuously n times (for example, twice), supplies the error signal to the MCU 130. In other words, the nGAUGE_INT2 signal of low level is supplied to the MCU 130. The MCU 130 monitors, at the second period (for example, 1 sec), whether the temperature of the battery BT is 85°C or more, and if this state is obtained continuously m times (for example, five times), changes the power supply unit 1 to the failure state. The first period is longer than the second period, and m is larger than n. The value of "second period × m" is shorter than the value of "first period × n". That is, the time required by the MCU 130 to judge whether to change the power supply unit 1 to the failure state is shorter than the time required by the battery monitoring circuit 100 to judge whether to supply the nGAUGE_INT2 signal of low level to the MCU 130. Thus, the MCU 130 can determine a high temperature in a short time as compared to the determination of a high temperature by the battery monitoring circuit 100.

As for conditions other than the condition concerning the temperature of the battery BT (more specifically, its high temperature state), after the reception of the error signal, the MCU 130 may execute the protection operation in accordance with the determination result of the battery monitoring circuit 100 without acquiring the information of the battery BT anew. This can reduce the power consumption of the power supply unit 1.

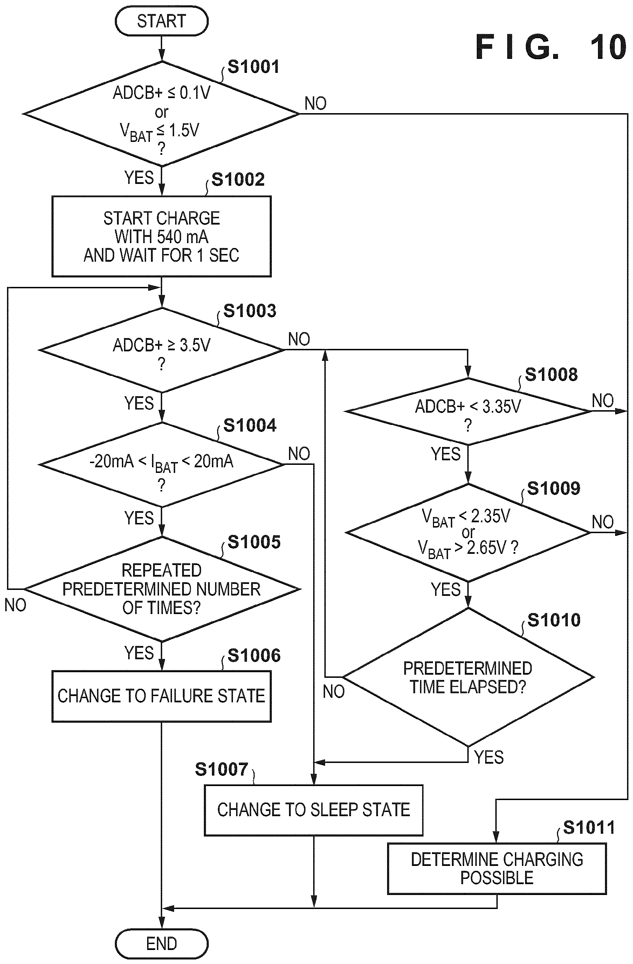

A detailed example of deep discharge determination processing (step S613) shown in Fig. 6B will be described with reference to Fig. 10. Fig. 10 shows an example of processing for determining deep discharge, and deep discharge may be determined by another processing. The operation shown in Fig. 10 is executed in a state in which an external device is connected to the connector USBC via the USB plug.

In step S1001, the MCU 130 determines whether the voltage ADCB+ is 0.1 V or less, or the power supply voltage V_{BAT} is 1.5 V or less. If the voltage ADCB+ is 0.1 V or less, or the power supply voltage V_{BAT} is 1.5 V or less ("YES" in step S1001), the MCU 130 advances the process to step S1002, and otherwise ("NO" in step S1001), advances the process to step S1011. The voltage ADCB+ is a voltage that appears in the PC2 terminal in the ON state of the switch circuit 80. The MCU 130 can acquire the power supply voltage V_{BAT} from the battery monitoring circuit 100 via I²C communication. If this condition is not satisfied, in step S1011, the MCU 130 determines that the battery BT is normal. If this condition is not satisfied, the MCU 130 determines that the battery BT may deeply be discharged, and executes subsequent processing. The voltage ADCB+ is a voltage obtained by dividing the power supply voltage V_{BAT} by the resistors R4 and R5, and one terminal of the resistor R5 on the low potential side of the voltage division circuit is connected to the ground potential. For this reason, if discharge of the battery BT progresses to such an extent that the switch circuit 80 cannot be turned on, the voltage ADCB+ substantially equals the ground potential. Hence, in step S1001, a threshold to the voltage ADCB+ is 0.1 V.

In step S1002, the MCU 130 starts charge with 540 mA, and after waiting for 1 sec in a state in which the charge is continued, advances to step S1003. Note that since the charge in this step is performed for the battery BT that may deeply be discharged, the value of the charge current in this step is preferably smaller than the value of the charge current in step S614 described above. Note that this charge is continued in following steps S1003 to S1011.

In step S1003, the MCU 130 determines whether the voltage ADCB+ is 3.5 V or more. If the voltage ADCB+ is 3.5 V or more ("YES" in step S1003), the MCU 130 advances the process to step S1004, and otherwise ("NO" in step S1003), advances the process to step S1008.

In step S1004, the MCU 130 determines whether a current I_{BAT} is larger than -20 mA and smaller than 20 mA. If the current I_{BAT} is larger than -20 mA and smaller than 20 mA ("YES" in step S1004), the MCU 130 advances the process to step S1005, and otherwise ("NO" in step S1004), advances the process to step S1007. The current I_{BAT} is a current flowing to the battery BT, and the MCU 130 can acquire it from the battery monitoring circuit 100 via I²C communication. Note that in this step, the current I_{BAT} with a + (plus) sign means a charge current, and the current I_{BAT} with a - (minus) sign means a discharge current. If this condition is not satisfied, the MCU 130 determines that the battery BT is not in the deep discharge state, and changes the power supply unit 1 to the sleep state.

In step S1005, the MCU 130 determines whether steps S1003 and S1004 are repeated a predetermined number of times. If steps S1003 and S1004 are repeated a predetermined number of times ("YES" in step S1005), the MCU 130 advances the process to step S1006, and otherwise ("NO" in step S1005), returns the process to step S1003. If steps S1003 and S1004 are satisfied even after the predetermined number of times of repetition, the MCU 130 determines that the battery BT is in the deep discharge state, and changes the power supply unit 1 to the failure state. A case where the determination ends with "YES" in step S1005 is a case where the voltage ADCB+ exhibits a large value although the battery BT is charged only in a short period of several sec with the charge current of 540 mA. It can be considered that this occurs because an irreversible change occurs in the internal structure of the battery BT due to deep discharge, and the internal resistance (impedance) of the battery BT greatly increases (degrades). Note that step S1004 is a step for confirming whether the voltage ADCB+ includes a voltage drop corresponding to the internal resistance of the battery BT.

In step S1008, the MCU 130 determines whether the voltage ADCB+ is smaller than 3.35 V If the voltage ADCB+ is smaller than 3.35 V ("YES" in step S1008), the MCU 130 advances the process to step S1009, and otherwise ("NO" in step S1008), advances the process to step S1011. If this condition is not satisfied, in step S1011, the MCU 130 determines whether the battery BT is normal.

In step S1009, the MCU 130 determines whether the power supply voltage V_{BAT} acquired from the battery monitoring circuit 100 via I²C communication is lower than 2.35 V or higher than 2.65 V. If the power supply voltage V_{BAT} is lower than 2.35 V or higher than 2.65 V ("YES" in step S1009), the MCU 130 advances the process to step S1010, and otherwise ("NO" in step S1009), advances the process to step S1008.

In step S1010, the MCU 130 determines whether a predetermined time elapses from the start of charge in step S1002. If a predetermined time elapses from the start of charge in step S1002 ("YES" in step S1010), the MCU 130 advances the process to step S1007, and otherwise ("NO" in step S1010), returns the process to step S1008. If steps S1008 and S1009 are satisfied even after repetition for the predetermined time, the MCU 130 determines that some error occurs in the charge of the battery BT by the charge circuit 20, and in step S1007, changes the power supply unit 1 to the sleep state.

In steps S1001, S1003, and S1008, the MCU 130 uses the value of ADCB+ as the condition. Since the condition concerning ADCB+ can be determined without using information acquired from the battery monitoring circuit 100, deep discharge can correctly be determined even if the battery monitoring circuit 100 cannot correctly acquire the state of the battery BT. Generally, the battery monitoring circuit 100 is optimized to correctly monitor the state of the battery BT in a state in which the voltage of the battery BT is normal. In other words, in a state in which the voltage of the battery BT is not normal, an error readily occurs in the state of the battery BT acquired by the battery monitoring circuit 100. Note that the state in which the voltage of the battery BT is normal indicates a state in which the power supply voltage V_{BAT} is not more than the full charge voltage of the battery BT and not less than the discharge end voltage.

The correlation of the above-described monitoring conditions will be described with reference to Fig. 5 again. If one of the conditions of the monitoring condition set defined in the column 505 is satisfied, the battery monitoring circuit 100 supplies an error signal (the nGAUGE_INT1 signal of low level) to the FF1. If one of the conditions of the monitoring condition set defined in the column 506 is satisfied, the battery monitoring circuit 100 supplies another error signal (the nGAUGE_INT2 signal of low level) to the MCU 130. Hence, the conditions of the monitoring condition set defined in the column 505 and the conditions of the monitoring condition set defined in the column 506 may be called error notification conditions for supplying the error signals. The error signal itself supplied to the FF1 is not supplied to the MCU 130. The error signal supplied to the MCU 130 is not supplied to the FF1. If the error signal is supplied to the FF1, the FF1 executes the protection operation in a hardware manner, as described above. Thus, the FF1 functions as an error processing circuit. On the other hand, if the error signal is supplied to the MCU 130, the MCU 130 executes the protection operation in a software manner, as described above. When the error signals are individually supplied from the battery monitoring circuit 100 to both the FF1 and the MCU 130, the power supply unit 1 is appropriately protected even if one of the FF1 and the MCU 130 does not normally operate.

Also, any monitoring condition of the monitoring condition set defined in the column 505 changes the power supply unit 1 to the reset wait state. As described above, the reset wait state is a state in which a user operation is required to cancel the restriction of discharge or charge of the battery BT. For this reason, when the restriction of discharge or charge of the battery BT is automatically canceled without depending on a user operation, occurrence of another error can be suppressed. If one of the conditions of the monitoring condition set defined in the column 505 is satisfied, discharge or charge of the battery BT is restricted by the FF1 in a hardware manner. Since this restriction is imparted without the accurate judgment by the MCU 130, the power supply unit 1 is not set in the failure state. This improves the convenience of the user. In other words, as compared to the FF1, the MCU 130 has high resistance to external noise such as static electricity or internal noise such as glitch noise. For this reason, judgment by the MCU 130 is excellent in accuracy.

On the other hand, if some conditions of the monitoring condition set defined in the column 506 are satisfied, the MCU 130 changes the power supply unit 1 to the failure state. If a specific condition is satisfied, the power supply unit 1 is changed to the failure state. Hence, the safety of the power supply unit 1 further improves. In addition, since the power supply unit 1 is changed to the failure state by the judgment of the MCU 130, whether to do the change can accurately be determined.

The number of conditions included in the monitoring condition set defined in the column 506 is larger than the number of conditions included in the monitoring condition set defined in the column 505. Since processing is performed not by the FF1 but by the MCU 130 for some conditions of high importance, the power supply unit 1 can be more appropriately protected. For example, the physical quantities of the battery BT monitored in the monitoring condition set defined in the column 506 include the physical quantities of the battery BT that are not monitored in the monitoring condition set defined in the column 505. More specifically, the monitoring condition set defined in the column 506 includes conditions concerning the voltage of the battery BT, but the monitoring condition set defined in the column 505 does not include conditions concerning the voltage of the battery BT. The monitoring condition set defined in the column 506 includes conditions concerning the lower limit temperature of the temperature of the battery BT, but the monitoring condition set defined in the column 505 does not include conditions concerning the lower limit temperature of the temperature of the battery BT.

Conditions concerning overheat of the battery BT are included in both the monitoring condition set defined in the column 505 and the monitoring condition set defined in the column 506. As for the upper limit temperature of the temperature of the power supply, in accurate error processing by the control circuit, the power supply unit is changed to the failure state, and in error processing by the error processing circuit as hardware, the power supply unit is changed to the reset wait state. It is therefore possible to more appropriately protect the power supply unit. Also, since the conditions concerning overheat of the battery BT are monitored by both the FF1 and the MCU 130, the power supply unit 1 can be protected even if one of these does not normally operate. The upper limit temperature (60°C) monitored in the monitoring condition set defined in the column 505 is lower than the upper limit temperature (85°C) monitored in the monitoring condition set defined in the column 506. Since the protection operation is performed first by the FF1 that operates at a high speed, the high temperature state of the battery BT is maintained, and it is possible to suppress the progress of degradation of the battery BT.

Conditions concerning the overcurrent of the battery BT are included in both the monitoring condition set defined in the column 505 and the monitoring condition set defined in the column 506. Since the conditions concerning the overcurrent of the battery BT are monitored by both the FF1 and the MCU 130, the power supply unit 1 can be protected even if one of these does not normally operate. The upper limit current value (10 A in discharge and 3.0 A in charge) monitored in the monitoring condition set defined in the column 505 is larger than the upper limit current value (9.75 A in discharge and 2.75 A in charge) monitored in the monitoring condition set defined in the column 505. Since the protection operation is performed first by the MCU 130, the high temperature state of the battery BT is maintained, and it is possible to suppress the progress of degradation of the battery BT. In addition, even if a failure such as freeze occurs in the MCU 130, the protection operation is performed by the FF1.

The monitoring condition set by the protection circuit 90 defined in the column 508 includes conditions concerning the current flowing to the battery BT (more specifically, the overcurrent in discharge) and conditions concerning the voltage of the battery BT (more specifically, overcharge and overdischarge). Since the current and the voltage are monitored even by the battery monitoring circuit 100, the power supply unit 1 can be protected even if one of the battery monitoring circuit 100 and the protection circuit 90 does not normally operate.

For the current flowing to the battery BT during discharge, the monitoring condition (9.75 A or more) for switching the nGAUGE_INT2 signal is stricter than the monitoring condition (10 A or more) for switching the nGAUGE_INT1 signal. In other words, if the current flowing to the battery BT continuously increases during discharge, the monitoring condition (step S704) for switching the nGAUGE_INT2 signal is satisfied first, and after that, the monitoring condition (step S706) for switching the nGAUGE_INT1 signal is satisfied. "A condition A is stricter than a condition B" may mean that the condition A is the necessary condition of the condition B but not the sufficient condition. Conversely, "the condition A is looser than the condition B" may mean that the condition A is the sufficient condition of the condition B but not the necessary condition. Similarly, for the current flowing to the battery BT during charge, the monitoring condition (2.75 A or more) for switching the nGAUGE_INT2 signal is stricter than the monitoring condition (3.0 A or more) for switching the nGAUGE_INT1 signal. In other words, if the current flowing to the battery BT continuously increases during charge, the monitoring condition (step S715) for switching the nGAUGE_INT2 signal is satisfied first, and after that, the monitoring condition (step S717) for switching the nGAUGE_INT1 signal is satisfied. For overheat of the battery BT, the monitoring condition (a temperature of 85°C or more continues for 2 min) for switching the nGAUGE_INT2 signal is looser than the monitoring condition (a temperature of 60°C or more continues for 2 sec) for switching the nGAUGE_INT1 signal. In other words, if the temperature of the battery BT continuously rises, the monitoring condition (step S709) for switching the nGAUGE_INT1 signal is satisfied first, and after that, the monitoring condition (step S711) for switching the nGAUGE_INT2 signal is satisfied.

For the current flowing to the battery BT during discharge, the monitoring condition (10 A or more or 9.75 A or more) for the battery monitoring circuit 100 to generate the error signal is stricter than the monitoring condition (12.67 A or more) for the protection circuit 90 to restrict discharge or charge of the battery BT. In other words, if the current flowing to the battery BT continuously increases during discharge, the monitoring condition for the battery monitoring circuit 100 to generate the error signal is satisfied first, and after that, the monitoring condition for the protection circuit 90 to restrict discharge or charge of the battery BT is satisfied. Also, for the voltage of the battery BT, the monitoring condition (4.235 V or more or 2.8 V or less) for the battery monitoring circuit 100 to generate the error signal is stricter than the monitoring condition (4.28 V or more or 2.5 V or less) for the protection circuit 90 to restrict discharge or charge of the battery BT. In other words, if the voltage of the battery BT continuously increases or decreases, the monitoring condition for the battery monitoring circuit 100 to generate the error signal is satisfied first, and after that, the monitoring condition for the protection circuit 90 to restrict discharge or charge of the battery BT is satisfied. Cancel of the protection operation by the protection circuit 90 takes time as compared to cancel of the protection operation by the battery monitoring circuit 100 because connection of an external device via the USB plug is required. When the protection operation by the battery monitoring circuit 100 is performed first, the convenience of the user improves.

The monitoring condition set for the battery monitoring circuit 100 to generate the error signal includes a condition that the current flowing to the battery BT is 10 A or more, and a condition that the current is 9.75 A or more. The difference between the thresholds is 0.25 A. The differences between the thresholds (10 A and 9.75 A) of these conditions and the threshold (12.67 A) of the condition for the protection circuit 90 to restrict discharge or charge of the battery BT are 2.67 A and 2.92 A, respectively. Both are larger than 0.25 A. This makes it possible to easily suppress simultaneous working of the protection operation by the battery monitoring circuit 100 and the protection operation by the protection circuit 90. In addition, the protection operation by the battery monitoring circuit 100 can be implemented before the protection operation by the protection circuit 90. That is, if the battery monitoring circuit 100 has no abnormality, the protection operation is performed not by the protection circuit 90 but by the battery monitoring circuit 100. This can facilitate recovery from the state in which the protection is performed.

In the monitoring condition set defined in the column 506, if the voltage of the battery BT is 2.8 V or less, the MCU 130 changes the power supply unit 1 to the sleep state. If the residual quantity of the battery BT is equal to or smaller than a predetermined first lower limit value, the voltage of the battery BT is 2.8 V or less. Furthermore, in the monitoring condition set defined in the column 508, if the column of the battery BT is 2.5 V or less, the switches SC and SD are turned off. If the residual quantity of the battery BT is equal to or smaller than a predetermined second lower limit value, the voltage of the battery BT is 2.5 V or less. The second lower limit value is lower than the first lower limit value. Also, as shown in Fig. 10, if the voltage of the battery BT is 1.5 V or less, or the voltage ADCB+ is 0.1 V or less, the MCU 130 changes the power supply unit 1 to the failure state in a case where another predetermined condition is satisfied. If the residual quantity of the battery BT is equal to or smaller than a predetermined third lower limit value, the voltage of the battery BT is 1.5 V or less, or the voltage ADCB+ is 0.1 V or less. The third lower limit value is lower than the second lower limit value. As described above, in some embodiments, a stepwise protection operation according to the residual quantity of the battery BT is executed. The state in which the residual quantity of the battery BT is equal to or smaller than the predetermined third lower limit value indicates that the battery BT is in the deep discharge state.

If the voltage of the battery BT is 2.8 V or less, the protection circuit 90 changes the power supply unit 1 to the connection wait state by turning off the switch SD. If the residual quantity of the battery BT is larger than the above-described third lower limit value, the power supply unit 1 does not change to the failure state. Hence, the protection circuit 90 returns the switch SC to the ON state when an external device is connected to the connector USBC via the USB plug, and charge of the battery BT progresses. This makes it possible to suppress continuation of charge to the battery BT if the battery BT is in the deep discharge state.

The monitoring condition set by the protection circuit 90 defined in the column 508 does not include conditions concerning the temperature of the battery BT. If the battery BT is not monitored, the size of the protection circuit 90 can be reduced. Since the temperature of the battery BT is not monitored by the protection circuit 90, another circuit (battery monitoring circuit 100) performs stricter protection. More specifically, the battery monitoring circuit 100 uses a condition concerning a high temperature state of the battery BT as a condition for changing the power supply unit 1 to the failure state. This further improves the safety of the power supply unit 1. The battery monitoring circuit 100 uses a condition concerning a low temperature state of the battery BT as a condition for changing the power supply unit 1 to the sleep state. Since the low temperature state of the battery BT is expected to be eliminated naturally, a user operation is not required to cancel restriction of discharge or charge of the battery BT. This improves the convenience of the user

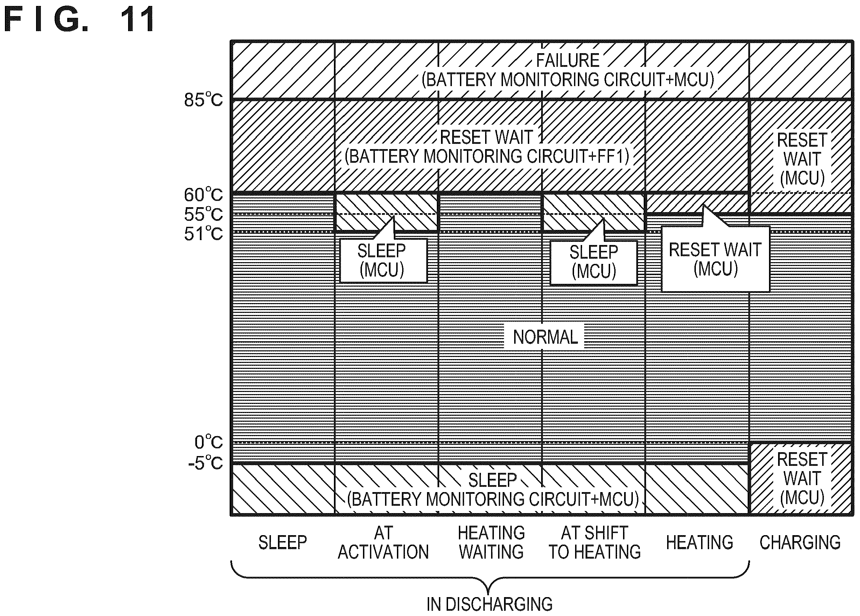

Fig. 11 is a view in which the temperatures of the battery BT, which are determined as an error by the power supply unit 1, are organized. As described above, if the temperature of the battery BT falls outside the normal range, the protection control unit 200 at least temporally restricts at least one of charge of the battery BT and power supply from the battery BT to the heater HT. The normal range of the battery BT changes depending on the operation state of the power supply unit 1, as will be described below in detail.

The lower limit value of the normal range of the temperature of the battery BT changes depending on whether the battery BT is being discharged or charged. If the battery BT is being discharged, the lower limit value of the normal range of the temperature of the battery BT is -5°C. If the temperature of the battery BT is -5°C or less, the battery monitoring circuit 100 supplies the error signal to the MCU 130, and accordingly, the MCU 130 changes the power supply unit 1 to the sleep state. On the other hand, if the battery BT is being charged, the lower limit value of the normal range of the temperature of the battery BT is 0°C. If the temperature of the battery BT is 0°C or less, the MCU 130 changes the power supply unit 1 to the reset wait state. If an external device is connected to the connector USBC via the USB plug, but charge to the battery BT is not being performed, the upper limit value and the lower limit value of the normal range of the temperature of the battery BT may be the same as during charge.

Thus, the protection control unit 200 raises the lower limit value of the normal range of the temperature of the battery BT from -5°C to 0°C when starting charge of the battery BT. If the temperature of the battery BT is low in charge of the battery BT, electrodeposition readily occurs. Electrodeposition is a phenomenon that metal ions are generated, by an oxidation-reduction reaction, from a metal oxide that is an active material, and deposited on the surface of the negative electrode, thereby forming a metal layer. When starting charge of the battery BT, the lower limit value of the normal range of the temperature of the battery BT is raised, thereby readily suppressing occurrence of electrodeposition. The start of charge of the battery BT may be an arbitrary point of time in a period after an external device is connected to the connector USBC of the power supply unit 1 via the USB plug until power is stably supplied to the battery BT.

The lower limit value of the normal range of the temperature of the battery BT is maximum during charge of the battery BT. Thus, when the lower limit value of the normal range of the temperature of the battery BT is lowered during discharge of the battery BT, excessive deviation of the temperature of the battery BT from the normal range during discharge can be suppressed.

The upper limit value of the normal range of the temperature of the battery BT variously changes depending on the operation state of the power supply unit 1. If the power supply unit 1 is in the sleep state, the upper limit value of the normal range of the temperature of the battery BT is 60°C. If the temperature of the battery BT is 60°C or more, the battery monitoring circuit 100 supplies the error signal to the FF1, and the FF1 changes the power supply unit 1 to the reset wait state accordingly. Also, if the temperature of the battery BT is 85°C or more, the battery monitoring circuit 100 supplies the error signal to the MCU 130, and the MCU 130 changes the power supply unit 1 to the failure state accordingly. Even in a case where the power supply unit 1 is in the heating wait state, the upper limit value of the normal range of the temperature of the battery BT is the same as in the case where the power supply unit 1 is in the sleep state.

At the time of activation of the power supply unit 1, that is, when the power supply unit 1 is being shifted from the sleep state to the heating wait state (steps S601 to S603 in Fig. 6A), the upper limit value of the normal range of the temperature of the battery BT is 51°C. If the temperature of the battery BT is 51°C or more, the MCU 130 changes the power supply unit 1 to the sleep state. Also, if the temperature of the battery BT is 60°C or more, the battery monitoring circuit 100 supplies the error signal to the FF1, and the FF1 changes the power supply unit 1 to the reset wait state accordingly. Furthermore, if the temperature of the battery BT is 85°C or more, the battery monitoring circuit 100 supplies the error signal to the MCU 130, and the MCU 130 changes the power supply unit 1 to the failure state accordingly. Even in a case where the power supply unit 1 is being shifted from the heating wait state to the heating state, the upper limit value of the normal range of the temperature of the battery BT is the same as in the case where the power supply unit 1 is being shifted from the sleep state to the heating wait state.

If the power supply unit 1 is in the heating state, the upper limit value of the normal range of the temperature of the battery BT is 55°C. If the temperature of the battery BT is 55°C or more, the MCU 130 changes the power supply unit 1 to the reset wait state. Also, if the temperature of the battery BT is 60°C or more, the battery monitoring circuit 100 supplies the error signal to the FF1, and the FF1 changes the power supply unit 1 to the reset wait state accordingly. Furthermore, if the temperature of the battery BT is 85°C or more, the battery monitoring circuit 100 supplies the error signal to the MCU 130, and the MCU 130 changes the power supply unit 1 to the failure state accordingly.

If the power supply unit 1 is being charged, the upper limit value of the normal range of the temperature of the battery BT is 55°C. If the temperature of the battery BT is 55°C or more, the MCU 130 changes the power supply unit 1 to the reset wait state. Furthermore, if the temperature of the battery BT is 85°C or more, the battery monitoring circuit 100 supplies the error signal to the MCU 130, and the MCU 130 changes the power supply unit 1 to the failure state accordingly.

Thus, the protection control unit 200 raises the upper limit value of the normal range of the temperature of the battery BT from 51°C to 55°C when starting heating of the heater HT. During heating of the heater HT, that is, during supply of power from the battery BT to the heater HT, the battery BT generates heat due to the internal resistance of the battery BT. For this reason, the upper limit value of the normal range at the time of shift of the heater HT to heating is made lower than the upper limit value during heating, thereby readily suppressing the temperature of the battery BT exceeding the normal range during heating of the heater HT. In other words, if the temperature of the battery BT is expected to exceed the normal range during heating of the heater HT, the heater HT is not heated. The start of heating of the heater HT may be an arbitrary point of time in a period after an instruction for heating the heater HT is received until the heater HT changes to a heated state.

The upper limit value of the normal range of the battery BT is maximum (60°C) in a case where the power supply unit 1 is in the sleep state and the heating wait state (that is, in a state other than heating of the heater HT). As described above, the sleep state is a state in which the MCU 130 is waiting for a signal generated in accordance with a user operation on the slider 13. The heating wait state is a state in which the MCU 130 is waiting for a signal generated in accordance with a user operation on the switch SW. If the power supply unit 1 is in these states, power consumption of the battery BT is small, and the heat generation amount of the battery BT is also small. For this reason, in these cases, the upper limit of the normal range of the battery BT is made higher than that during heating, thereby suppressing excessive protection concerning the temperature of the battery BT.

The rise width of the lower limit value of the normal range of the temperature of the battery BT when starting charge of the battery BT (that is, 0°C - (-5°C) = 5°C) is larger than the rise width of the upper limit value of the normal range of the temperature of the battery BT when starting supply of power to the heater HT (that is, 55°C - 51°C = 4°C). When the lower limit temperature of the normal range of the battery BT at the time of charge is thus strictly set, the safety of the power supply unit 1 further improves.

If the temperature of the battery BT is higher than a temperature threshold (85°C) higher than the upper limit value of the normal state, the protection control unit 200 changes the power supply unit 1 to the failure state. If the temperature of the battery BT continuously rises even after error processing is performed because the battery BT exceeds the upper limit value of the normal state, it can be considered that some failure occurs in the power supply unit 1. For this reason, when the power supply unit 1 is changed to the failure state in a case where the temperature of the battery BT exceeds the temperature threshold (85°C) higher than the upper limit value of the normal state, the safety of the power supply unit 1 can be improved.

The invention is not limited to the foregoing embodiments, and various variations/changes are possible within the spirit of the invention.

This application claims priority from Japanese Patent Application No. 2021-079744 filed May 10, 2021, which is hereby incorporated by reference herein.

## Claims

1. A power supply unit for an aerosol generation device, comprising:
a power supply;
a heater connector to which a heater configured to heat an aerosol source by consuming power supplied from the power supply is connected;
a control circuit configured to control supply of the power from the power supply to the heater;
a power supply monitoring circuit configured to monitor a state of the power supply;
a charge cutoff switch including a first control terminal and configured to cut off charge to the power supply based on an input to the first control terminal;
a discharge cutoff switch including a second control terminal and configured to cut off discharge from the power supply based on an input to the second control terminal; and
a protection circuit configured to supply a control signal to at least one of the first control terminal and the second control terminal based on the state of the power supply,
wherein in a case where the state of the power supply satisfies a condition of the first condition set, the power supply monitoring circuit performs an operation for at least temporarily restricting at least one of the charge of the power supply and the supply of the power from the power supply to the heater,
in a case where the state of the power supply satisfies a condition of the second condition set, the protection circuit turns off at least one of the discharge cutoff switch and the charge cutoff switch,
the first condition set includes a condition concerning a first physical quantity of the power supply, and
the second condition set includes a condition concerning the first physical quantity of the power supply.

2. The power supply unit according to claim 1, wherein the condition concerning the first physical quantity included in the first condition set is stricter than the condition concerning the first physical quantity included in the second condition set.

3. The power supply unit according to claim 1, wherein the condition concerning the first physical quantity included in the first condition set is satisfied before the condition concerning the first physical quantity included in the second condition set.

4. The power supply unit according to any one of claims 1 to 3, wherein
the first condition set includes
a condition concerning comparison between the first physical quantity and a first threshold, and
a condition concerning comparison between the first physical quantity and a second threshold different from the first threshold,
the second condition set includes a condition concerning comparison between the first physical quantity and a third threshold, and
a difference between the first threshold and the second threshold is smaller than a difference between the first threshold and the third threshold and smaller than a difference between the second threshold and the third threshold.

5. The power supply unit according to claim 4, wherein
the third threshold is larger than the second threshold, and
the second threshold is larger than the first threshold.

6. The power supply unit according to claim 4 or 5, wherein
the power supply monitoring circuit includes a first output terminal and a second output terminal,
in a case where the state of the power supply satisfies the condition concerning the comparison between the first physical quantity and the first threshold, a first error signal is output from the first output terminal, and
in a case where the state of the power supply satisfies the condition concerning the comparison between the first physical quantity and the second threshold, a second error signal is output from the second output terminal.

7. The power supply unit according to any one of claims 1 to 6, wherein in a case where the state of the power supply satisfies the condition concerning the first physical quantity of the power supply, the power supply monitoring circuit does not change the power supply unit to a failure state in which charge and discharge of the power supply are permanently inhibited.

8. The power supply unit according to any one of claims 1 to 5, wherein
in a case where it is determined that a residual quantity of the power supply is smaller than a first lower limit value, the power supply monitoring circuit performs an operation for restricting the discharge from the power supply,
in a case where it is determined that the residual quantity of the power supply is smaller than a second lower limit value lower than the first lower limit value, the protection circuit turns off the discharge cutoff switch, and
in a case where it is determined that the residual quantity of the power supply is smaller than a third lower limit value lower than the second lower limit value, the control circuit performs an operation for changing the power supply unit to a failure state in which charge and discharge of the power supply are permanently inhibited.

9. The power supply unit according to claim 8, wherein the control circuit can determine whether the residual quantity of the power supply is smaller than the third lower limit value without using information acquired from the power supply monitoring circuit.

10. The power supply unit according to claim 8 or 9, wherein a condition for returning, to an ON state, the discharge cutoff switch that is turned off by determining that the residual quantity of the power supply is smaller than the second lower limit value includes the control circuit determining that the residual quantity of the power supply is larger than the third lower limit value.

11. The power supply unit according to any one of claims 1 to 10, wherein
the first condition set includes a condition concerning a second physical quantity of the power supply, the second physical quantity being different from the first physical quantity of the power supply, and
the second condition set does not include a condition concerning the second physical quantity of the power supply.

12. The power supply unit according to claim 11, wherein the condition concerning the second physical quantity included in the first condition set includes a condition for changing the power supply unit to a failure state in which charge and discharge of the power supply are permanently inhibited.

13. The power supply unit according to claim 11 or 12, wherein
the first condition set includes a condition concerning a temperature of the power supply being higher than an upper limit temperature,
the second condition set does not include a condition concerning the temperature of the power supply, and
in a case where the condition concerning the temperature of the power supply being higher than the upper limit temperature is satisfied, the control circuit changes the power supply unit to a failure state in which charge and discharge of the power supply are permanently inhibited.

14. The power supply unit according to any one of claims 11 to 13, wherein the condition concerning the second physical quantity included in the first condition set includes a condition for changing the power supply unit to a state in which an operation by a user is not required to cancel restriction of the charge of the power supply or the supply of the power from the power supply to the heater

15. The power supply unit according to claim 14, wherein
the first condition set includes a condition concerning the temperature of the power supply being lower than a lower limit temperature,
the second condition set does not include a condition concerning the temperature of the power supply, and
in a case the condition concerning the temperature of the power supply being lower than the lower limit temperature is satisfied, the control circuit changes the power supply unit to the state in which the operation by the user is not required to cancel restriction of the discharge or the charge of the power supply.
